# EUROPÄISCHE PATENTSCHRIFT

(11) **EP 0 642 879 B1**
(45) Veröffentlichungstag und Bekanntmachung des Hinweises auf die Patenterteilung: **13.03.1996**
(21) Anmeldenummer: 94113196.3
(22) Anmeldetag: 24.08.1994
(51) Int. Cl.: B23Q 3/157

(54) **Werkzeugmaschine**
Machine tool
Machine outil

(30) Priorität: 11.09.1993 DE 4330851; 11.09.1993 DE 4330853; 11.09.1993 DE 4330854
(43) Veröffentlichungstag der Anmeldung: 15.03.1995
(73) Patentinhaber: Chiron-Werke GmbH & Co. KG, D-78532 Tuttlingen (DE)
(72) Erfinder: Rütschle, Eugen, Dipl.-Ing., D-78570 Mühlheim (DE); Haninger, Rudolf, D-78606 Seitingen (DE)
(74) Vertreter: Witte, Alexander, Dr.-Ing.

(56) Entgegenhaltungen:
- EP-A- 0 157 950
- DE-A- 1 812 317
- DE-C- 3 521 009
- DE-C- 3 831 869

## Beschreibung

Die Erfindung betrifft eine Werkzeugmaschine mit einem Werkzeugwechsler zum Überführen von Werkzeugen zwischen einer vertikalachsigen Spindel und einer Lade-/Entladeposition eines Werkzeugmagazins, wobei die Lade-/Entladeposition sich in einer Vorderansicht der Werkzeugmaschine oberhalb der Spindel und seitlich zu dieser versetzt befindet, und ferner der Werkzeugwechsler zwei Wechslerarme umfaßt, die im Gegentaktbetrieb jeweils zu einem Überführen eines ersten Werkzeuges von der Spindel zur Lade-/Entladeposition und eines zweiten Werkzeuges von der Lade-/Entladeposition zur Spindel beitragen.

Eine Werkzeugmaschine der vorstehend genannten Art ist aus der DE-PS 38 31 869 bekannt.

Bei der bekannten Werkzeugmaschine soll eine Doppelspindelanordnung dadurch realisiert werden, daß in einem gemeinsamen Spindelstock zwei vertikalachsige Spindeln nebeneinander angeordnet werden. Der Werkzeugwechsler jeder einzelnen Spindel dieser bekannten Werkzeugmaschine umfaßt zwei Wechslerarme, die im Gegentaktbetrieb Werkzeuge zwischen einer unteren Spindelposition und einer oberen Übergabeposition an einem Werkzeugmagazin überführen. Die Übergabeposition liegt dabei seitlich von der Spindelachse beabstandet und zwar bei jeder Spindel auf der von der jeweils anderen Spindel abgewandten Seite.

Bei dieser bekannten Anordnung ist daher ein relativ komplizierter Bewegungsablauf der beiden Wechslerarme erforderlich, der unsymmetrisch sein muß, weil die Wechslerarme symmetrisch zur Spindelachse angeordnet sind, aber beide zwischen einer außerhalb der Spindelachse angeordneten Übergabesposition und der Spindelposition in der Spindelachse arbeiten. Da beide Wechslerarme überdies zwischen denselben Positionen arbeiten, muß zusätzlich Sorge dafür getragen werden, daß im Gegentaktbetrieb der Wechslerarme keine Kollision zwischen den Armen und den Werkzeugen auftritt, die von Greifern an den freien Enden der Wechslerarme gehalten werden.

Aus diesem Grunde ist es bei der bekannten Werkzeugmaschine erforderlich, die Wechslerarme um mehrere Achsen zu schwenken, damit der erforderliche Bewegungsablauf sichergestellt ist.

Obwohl die vorstehend beschriebene Anordnung bei Doppelspindel-Werkzeugmaschinen erfolgreich einsetzbar ist, gibt es auch Anwendungsfälle, bei denen im Rahmen einer Einspindelmaschine ein solcher mechanischer Aufwand nicht erforderlich ist.

Bei einer aus der DE-PS 35 21 009 bekannten Werkzeugmaschine ist das Werkzeugmagazin in einer Horizontalebene U-förmig angeordnet (sogenanntes "Hufeisenmagazin"). Es umschließt damit den Spindelstock und den Fahrständer auf beiden Seiten sowie auf der Rückseite. Das Magazin ist an den beiden freien Enden der nach vorne weisenden Schenkel des U jeweils mit einer Übergabeposition für Werkzeughalter versehen. Am Spindelstock ist ein Werkzeugwechsler mit zwei Wechslerarmen angeordnet. Je ein Wechslerarm ist auf einer Seite des Spindelstocks angelenkt, so daß Werkzeuge aus einer Spindel des Spindelstocks, die sich unterhalb der Übergabepositionen befindet, zu der einen oder der anderen Übergabeposition gebracht werden können. Der Werkzeugwechsel vollzieht sich dabei im Gegentakt. D.h., daß jeweils einer der Greifarme das Werkzeug des gerade abgeschlossenen Bearbeitungsvorganges aus der Spindel entnimmt und in die ihm zugeordnete eine Übergabeposition überführt, während der andere Wechslerarm das für den nächsten Bearbeitungsvorgang benötigte Werkzeug aus der ihm zugeordneten anderen Übergabeposition des Werkzeugmagazins in die Spindel überführt.

Bei dieser bekannten Werkzeugmaschine laufen die Werkzeuge im Werkzeugmagazin in einer Horizontalebene um. Eine Endlosbahn für die Werkzeuge verläuft damit am Innenrand sowie parallel dazu am Außenrand des U und wird an den freien Enden der Schenkel des U jeweils um 180° auf eine Halbkreisbahn umgelenkt.

Im Werkzeugmagazin läuft entlang der Endlosbahn eine Förderkette, die mit Speicherplätzen für die Werkzeuge bzw. die Werkzeughalter versehen ist. Die Speicherplätze sind als U-förmige Greifer ausgebildet, die sich quer zur Förderkette nach außen hin erstrecken und so eine Aufnahme bilden, indem die beiden Schenkel bzw. Finger der U-förmigen Greifer in die genormte V-Rille der Werkzeughalter eingreifen.

Die Anordnung ist dabei so getroffen, daß die Werkzeuge bzw. Werkzeughalter mit ihrer Achse außerhalb der Längsmittelebene der Förderkette gehalten werden. Dies führt jedoch in der Praxis zu zwei Problemen:

Das erste Problem besteht darin, daß die mit ihrem Schwerpunkt außerhalb der Längsmittelebene gehaltenen Werkzeuge in Außenkurven der Endlosbahn starken Fliehkräften ausgesetzt sind. Es müssen daher besondere Maßnahmen getroffen werden, um die Werkzeuge in den die Speicherplätze bildenden Greifern der Förderkette festzuhalten.

Ein zweites Problem besteht darin, daß die freien Enden der Greiferfinger sich in Innenkurven der Endlosbahn aneinander annähern. Man muß daher einen bestimmten Abstand der Greifer zueinander entlang der Förderkette einhalten, damit sich die Greiferfinger beim Durchfahren von Innenkurven nicht berühren.

Dieses Einhalten von Abständen führt jedoch andererseits wiederum zu einer Verminderung der Anzahl von Werkzeugen, bezogen auf eine bestimmte Länge der Förderkette.

Werkzeugmaschinen der vorstehend genannten Art werden in großem Umfange in der Praxis eingesetzt. Da Werkzeugmaschinen dieser Art häufig beschafft werden, um lediglich ein bestimmtes Werkstück in entsprechend großen Stückzahlen über lange Zeiträume hinweg fertigen zu können, beispielsweise ein bestimmtes Bauteil eines Kraftfahrzeuges, werden solche Werkzeugmaschinen häufig an den jeweiligen speziellen Einsatzfall angepaßt. Es kann dabei geschehen, daß im Einzelfall auf bestimmte zusätzliche Bedürfnisse Rücksicht genommen werden muß, beispielsweise zusätzliche Einbauten im Arbeitsbereich der Maschine oder aber auch auf bestimmte räumliche Gegebenheiten am Aufstellungsort der Maschine.

Es kann in solchen Fällen geschehen, daß die vorstehend genannte Werkzeugmaschine aufgrund ihres sehr kompakten Aufbaus mit vielen um den Spindelstock sowie den Fahrständer herum konzentrierten Baugruppen und Aggregaten nicht die optimale Lösung darstellt, weil eine solche kompakte und gedrängte Konstruktion naturgemäß nicht so leicht an bestimmte Besonderheiten angepaßt werden kann.

Der Erfindung liegt daher die Aufgabe zugrunde, eine Werkzeugmaschine der eingangs genannten Art dahingehend weiterzubilden, daß ein Werkzeugwechsel mit verringertem mechanischem Aufwand, insbesondere im Bereich der Kinematik der Wechslerarme, erreicht wird.

Diese Aufgabe wird erfindungsgemäß dadurch gelöst, daß die Wechslerarme jeweils nur um eine Achse drehbar sind, daß jeder der Wechslerarme mit einer separaten Übergabeposition zusammenarbeitet, wobei sich die beiden Übergabepositionen in unterschiedlichem Abstand vor der Lade-/Entladeposition befinden, und daß der Werkzeugwechsler ferner eine Transfereinrichtung zum Überführen der Werkzeuge zwischen der Lade-/Entladeposition sowie wahlweise einer der Übergabepositionen umfaßt.

Die der Erfindung zugrundeliegende Aufgabe wird auf diese Weise vollkommen gelöst.

Die Tatsache, daß die Wechslerarme jeweils nur um eine Achse drehbar sind, bringt eine ganz erhebliche Vereinfachung des mechanischen Aufbaus mit sich, da sich die Zahl der bewegten Elemente und die Bewegungsrichtung der Elemente gegenüber der eingangs genannten Anordnung drastisch reduziert. Ferner ist es bei solch einfachen Bewegungsabläufen auch leichter möglich, diese so auszulegen, daß nur stetige Bewegungen ohne ruckartige Änderungen des Bewegungsablaufes auftreten. Dies ist sowohl für die Belastung und damit den Verschleiß des Werkzeugwechslers wie auch für die Geräuschentwicklung und die Geschwindigkeit des Werkzeugwechsels entscheidend.

Es ist zwar richtig, daß die Vereinfachung des Werkzeugwechslers im Bereich der Wechslerarme dadurch erkauft werden muß, daß eine zusätzliche Transfereinrichtung zum Überführen der Werkzeuge zwischen den beiden Übergabepositionen und der Lade-/Entladeposition erforderlich ist. Die zusätzliche Transfereinrichtung kann jedoch mit sehr einfachen Mitteln realisiert werden, so daß dieser an anderer Stelle erforderliche Zusatzaufwand weit geringer ist als die Einsparung an Komplexität in der Gestaltung der Wechslerarme.

Bei einer bevorzugten Ausgestaltung der Erfindung sind die Übergabepositionen und die Spindel in einer Horizontalebene auf den Eckpunkten eines gleichschenkligen Dreiecks angeordnet, dessen Scheitel durch die Spindel gebildet wird.

Diese Maßnahme hat den Vorteil, daß infolge der gleichen Entfernung zwischen der Spindel einerseits und den Übergabepositionen andererseits der Bewegungsablauf des Werkzeugwechslers bwz. der Wechslerarme weiter vereinfacht wird.

Dies gilt insbesondere dann, wenn der Scheitelwinkel des Dreiecks etwa 48° beträgt.

Diese Dimensionierung hat sich aus konstruktiven Gründen als besonders vorteilhaft erwiesen.

Ferner ist bevorzugt, wenn Greifer der Wechslerarme beim Werkzeugwechsel nur in Vertikalebenen bewegt werden, die die gleichen Schenkel des Dreiecks enthalten.

Diese Maßnahme hat den Vorteil, daß insbesondere bei Verwendung von als Parallelogrammgestängen ausgebildeten Wechslerarmen die Werkzeuge in gleichbleibender Orientierung mischen Spindel und Übergabeposition verfahren werden.

Bei Verwendung einer Winkeldimensionierung der weiter oben genannten Art ist dann besonders vorteilhaft, wenn die Drehachsen der Wechslerarme miteinander einen Winkel von etwa 48° einschließen.

Bei einer besonders bevorzugten Gruppe von Ausführungsbeispielen werden die Wechslerarme mittels Ritzeln angetrieben, die mit zueinander versetzten Zahnungen einer Zahnstange kämmen, wobei die Zahnstange in vertikaler Richtung verfahrbar ist und die Zahnungen über den Umfang der Zahnstange versetzt angeordnet sind.

Diese Maßnahme hat den Vorteil, daß zur Erzeugung der Gegentaktbewegung der Wechslerarme ein extrem einfacher Antriebsmechanismus verwendet wird, so daß das Ziel, den Aufbau des Werkzeugwechslers besonders einfach zu gestalten, auf diese Weise besonders gut erreicht wird.

Bei dieser Variante der Erfindung ist ferner bevorzugt, wenn die Zahnstange mittels eines Sinusgetriebes verfahrbar ist.

Diese Maßnahme hat den Vorteil, daß die Zahnstange bei ihrer Vertikalbewegung im oberen und im unteren Totpunkt jeweils stetig eine Richtungsumkehr vollzieht, so daß stoß- oder ruckartige Belastungen auf den Werkzeugwechsler unterbleiben.

Bei einer weiteren Gruppe von Ausführungsbeispielen umfaßt die Transfereinrichtung einen Transfergreifer.

Diese Maßnahme hat den Vorteil, daß mit an sich bekannten Maßnahmen die Überführung der Werkzeuge zwischen den Übergabepositionen und der Lade-/Entladeposition vorgenommen werden kann.

Hierzu ist besonders bevorzugt, wenn der Transfergreifer in vertikaler und in horizontaler Richtung verfahrbar ist.

Diese Maßnahme hat nämlich den Vorteil, die genannten Positionen auf unterschiedlichen Höhen anordnen zu können, so daß man die Transfereinrichtung und die Wechslerarme andererseits einfacher so ausbilden kann, daß Kollisionen zwischen diesen bewegten Elementen vermieden werden.

Hierbei ist besonders bevorzugt, wenn die Werkzeuge während des Transfers in der Transfereinrichtung in Köchern gehalten werden.

Diese Maßnahme hat den Vorteil, daß zwei unterschiedliche Angriffspunkte entstehen, nämlich einmal am genormten Werkzeug bzw. Werkzeughalter einerseits und an dem Köcher andererseits. Auf diese Weise kann die Übergabe von Magazin zum Transfergreifer einerseits sowie vom Transfergreifer zu den Greifern der Wechslerarme andererseits auf besonders einfache Weise vollzogen werden.

Eine weitere Gruppe von Ausführungsbeispielen mit Merkmalen, die auch unabhängig von den zuvor abgehandelten Merkmalen eingesetzt werden können, zeichnet sich dadurch aus, daß das Werkzeugmagazin eine entlang einer Endlosbahn geführte Kette umfaßt, die mit Speicherplätzen für die Werkzeuge versehen ist und die in den Speicherplätzen aufgenommenen Werkzeuge entlang der Endlosbahn verfährt, derart, daß ein vorbestimmter Speicherplatz in die Lade-/Entladeposition des Werkzeugmagazins verfahrbar ist, wobei die Speicherplätze in der Längsmittelebene der Kette angeordnet sind.

Dadurch, daß die Speicherplätze in der Längsmittelebene der Kette angeordnet sind, wird erreicht, daß auch die Schwerpunkte der Werkzeuge bzw. Werkzeughalter in der Längsmittelebene laufen. Aufgrund dessen sind die Fliehkräfte in großen Kurven wesentlich geringer, weil der Krümmungsradius der Bewegungsbahn kleiner ist.

Weiterhin ist dabei von besonderem Vorteil, daß der Abstand der Werkzeughalter entlang der Förderkette zueinander konstant bleibt, unabhängig davon, ob die Förderkette sich auf einem geraden Wegstück oder in einer Innenkurve oder einer Außenkurve befindet. Auf diese Weise ist es möglich, eine größere Anzahl von Werkzeugen pro Längeneinheit der Förderkette vorzusehen.

Eine Variante dieses Ausführungsbeispiels der Erfindung zeichnet sich dadurch aus, daß die Werkzeuge in separaten Köchern derart in der Kette gehalten sind, daß sie mit ihren Achsen in einer Längsmittelebene der Kette verfahren werden.

Diese Maßnahme hat den Vorteil, daß zum einen die Förderketten unabhängig von der Art der Werkzeughalter ausgebildet werden können, weil die notwendige Adaption an die unterschiedlichen Kegel und dgl. der Werkzeughalter in den Köchern stattfinden kann. Ferner hat diese Maßnahme den Vorteil, daß eine gesonderte Handhabung von Köcher und Werkzeug bzw. Werkzeughalter möglich ist, was insbesondere beim Laden und Entladen der Werkzeuge von Vorteil ist, wenn zwischen dem Werkzeugmagazin und den Wechslerarmen des Werkzeugwechslers eine gesonderte Transfereinrichtung vorgesehen ist.

Bei einer bevorzugten Ausgestaltung der zuletzt genannten Ausführungsbeispiele umfaßt die Kette Kettenglieder, die mittels Kettengelenken miteinander verbunden sind, wobei die Kettenglieder eine Hülse zur Aufnahme der Werkzeuge aufweisen.

Diese Maßnahme hat den Vorteil, daß eine besonders kompakte Bauform entsteht, bei der die Aufnahmen für die Werkzeuge unmittelbar als Kettenglieder ausgebildet sind.

Besonders bevorzugt ist in diesem Fall, wenn die Kette in einer Horizontalebene verläuft und die Hülsen im wesentlichen zylindrisch und nach unten offen sind.

Diese Maßnahme hat den Vorteil, daß ein besonders einfacher Zugang zu den Speicherplätzen in der Kette möglich ist.

Bei einer Weiterbildung dieses Ausführungsbeispiels sind die Hülsen an ihrer Oberseite mittels eines Deckels verschlossen, der mit einer ersten Riegeleinrichtung für die Werkzeuge versehen ist.

Diese Maßnahme hat den Vorteil, daß die Werkzeuge bzw. Werkzeughalter in besonders einfacher Weise in den Speicherplätzen der Kette gehalten und in der Lade-/Entladeposition freigegeben werden können.

Dies gilt insbesondere dann, wenn der Deckel in der Horizontalebene verschwenkbar ist und eine Riegelöffnung aufweist, durch die ein dem Werkzeug zugeordnetes Riegelelement steckbar ist, das in einer ersten Schwenkstellung des Deckels in Vertikalrichtung verriegelt und in einer zweiten Schwenkstellung in Vertikalrichtung freigegeben ist.

Es liegt auf der Hand, daß dadurch eine äußerst einfache Verriegelungsanordnung erreicht wird, bei der lediglich eine Schwenkbewegung eines Deckels ausgeführt werden muß. Dies kann jedoch in sehr einfacher Weise beispielsweise dadurch geschehen, daß der Deckel unter der Kraft einer Rückstellfeder in der ersten Schwenkstellung gehalten und lediglich beim Entriegeln mittels einer Betätigungseinheit, beispielsweise mittels eines pneumatischen Zylinders, gegen die Kraft der Rückstellfeder in die zweite Schwenkstellung ausgelenkt wird.

In diesem Falle ist auch besonders bevorzugt, wenn der Deckel um eine Achse verschwenkbar ist, die zugleich die Achse des Kettengelenks ist.

Auch auf diese Weise wird ein sehr einfacher Aufbau erreicht.

Bei einer weiteren Gruppe von Ausführungsbeispielen der Erfindung, deren Merkmale auch unabhängig von den zuvor abgehandelten Merkmalen einsetzbar sind, ist das Werkzeugmagazin in einer Horizontalebene L-förmig ausgebildet, wobei ein erster Schenkel des L seitlich vom Fahrständer und ein zweiter Schenkel des L hinter dem Fahrständer angeordnet ist.

Eine Werkzeugmaschine nach diesem Ausführungsbeispiel der Erfindung bietet im Gegensatz zur Werkzeugmaschine gemäß DE-PS 35 21 009 auf einer Seite des Fahrständers genügend Einbauraum, um den genannten besonderen Anforderungen gerecht zu werden. Diese besonderen Anforderungen können beispielsweise darin bestehen, daß Zusatzaggregate mit großem Bauvolumen zur Verfügung gestellt werden müssen, die im Arbeitsraum der Werkzeugmaschine angeordnet und vom Fahrständer während des Betriebes der Werkzeugmaschine mit verfahren werden müssen.

All dies ist bei der erfindungsgemäßen Werkzeugmaschine möglich, weil von der Grundkonstruktion der Maschine her eine komplette Seite des Fahrständers für derartige Zusätze und Einbauten zur Verfügung steht.

Bei einer bevorzugten Weiterbildung dieses Ausführungsbeispiels ist der zweite Schenkel länger als der erste Schenkel.

Diese Maßnahme hat den Vorteil, daß auch bei der erfindungsgemäßen Werkzeugmaschine Werkzeugmagazine von hoher Werkzeugkapazität aufgebaut werden können, wobei die Kapazität der Kapazität von sogenannten "Hufeisenmagazinen" durchaus ebenbürdig sein kann. Dies liegt daran, daß der hinter dem Fahrständer angeordnete zweite Schenkel im Prinzip beliebig lang ausgebildet werden kann, weil im Raum hinter dem Fahrständer keine besonderen Einbauten mehr vorhanden sind, allenfalls Installationsschränke und dgl., die jedoch ohne größere Probleme entsprechend beabstandet werden können.

Bei einer weiteren bevorzugten Ausgestaltung der Erfindung ist eine nur in einer Ebene flexible erste Energieführungskette von einem ersten, raumfesten Anlenkungspunkt in einer Horizontalebene zu einem zweiten, beweglichen Anlenkungspunkt am Fahrständer geführt.

Durch diese an sich bekannte Maßnahme wird eine sehr einfache und effektive Versorgung des Fahrständers mit elektrischem Strom, Druckluft, Drucköl, Wasser und dgl. erreicht, wobei alle hierzu erforderlichen Leitungen in der ersten Energieführungskette zusammengefaßt sind. Dadurch, daß die erste Energieführungskette nur in einer Ebene flexibel ist, nämlich in der erwähnten Horizontalebene, kann sie in dieser Horizontalebene beliebig geschwungen oder gefaltet werden, so daß sich der Fahrständer während seiner Verfahrwege in der Horizontalebene weit vom raumfesten Anlenkungspunkt entfernen und auf beliebigen Wegen sich diesem wieder annähern kann.

Besonders bevorzugt ist bei diesem Ausführungsbeispiel, wenn die erste Energieführungskette in einer Horizontalebene am oberen Ende des Fahrständers angeordnet ist.

Diese Maßnahme, die durch den frei tragenden Charakter der ersten Energieführungskette möglich wird, hat den Vorteil, daß im Raum unterhalb der ersten Energieführungskette weitere Einbauten oder bewegte Teile vorgesehen werden können, ohne daß die erste Energieführungskette stört. Da die erste Energieführungskette nämlich an einem raumfesten Punkt sowie auf einen Punkt gleicher Höhe am Fahrständer angelenkt ist, bleibt sie während des Betriebes der Werkzeugmaschine immer in dieser Horizontalebene und kann daher mit darunter angeordneten Bauelementen und Aggregaten nicht in Kollision geraten.

Besonders bevorzugt ist in diesem Falle, wenn die erste Energieführungskette so in einer Schleife in der Horizontalebene angeordnet ist, daß die Schleife sich stets außerhalb einer Störkontur des zweiten Schenkels der Werkzeugmaschine befindet.

Diese Maßnahme hat zum einen den Vorteil, daß die erste Energieführungskette immer nur in einer großen Schleife verschwenkt wird und damit deren Belastung gering ist. Andererseits aber ergibt sich der Vorteil, daß große vertikale Verfahrwege des Spindelstocks möglich sind, bei denen das Werkzeugmagazin durchaus durch die von der ersten Energieführungskette definierte Horizontalebene hindurchfahren kann.

Bei einer weiteren bevorzugten Ausgestaltung der Erfindung ist eine zweite Energieführungskette in einer Vertikalebene von einem dritten Anlenkungspunkt am Fahrständer zu einem vierten Anlenkungspunkt am Spindelstock geführt.

Auch diese Maßnahme hat den Vorteil, daß der Spindelstock in einfacher und betriebssicherer Weise mit den erforderlichen Energien, Signalen und dgl. versorgt werden kann.

Besonders bevorzugt ist in diesem Falle, wenn die zweite Energieführungskette an der dem ersten Schenkel des Werkzeugmagazins abgewandten Seite des Fahrständers angeordnet ist.

Diese Maßnahme nutzt den bereits ausführlich erläuterten Vorteil aus, daß auf dieser Seite des Fahrständers kein Teil des Werkzeugmagazins vorhanden ist, so daß der dort vorhandene Raum für die zweite Energieführungskette ausgenutzt werden kann.

Dies ist besonders dann vorteilhaft, wenn die zweite Energieführungskette so in einer Schleife in der Vertikalebene angeordnet ist, daß die Schleife nach unten hängt.

Diese Maßnahme hat nämlich den wesentlichen Vorteil, daß eine Verminderung der gesamten Bauhöhe der Werkzeugmaschine möglich wird, weil bei herkömmlichen Werkzeugmaschinen die Energieführungskette für die Versorgung des Spindelstocks stets bogenförmig oberhalb des oberen Endes des Spindelstocks angeordnet war und damit die gesamte Bauhöhe der Werkzeugmaschine bestimmt wird. Bei manchen Einsatzfällen sollen jedoch die Werkzeugmaschinen an Aufstellungsorten mit begrenztem Freiraum in der Vertikalen aufgestellt werden, so daß man bei herkömmlichen Werkzeugmaschinen hier mitunter auf Probleme stößt.

Weiterhin ist erfindungsgemäß bevorzugt, wenn der dritte Anlenkungspunkt unterhalb des zweiten Anlenkungspunktes liegt.

Auch diese Maßnahme hat den bereits erwähnten Vorteil, daß die für die Versorgung des Spindelstocks erforderliche Energieführungskette sich so weit unten wie möglich befindet, sogar unterhalb der ersten Energieführungskette für den Fahrständer. Auf diese Weise sind besonders sichere Bewegungsabläufe ohne jede Gefahr von Kollisionen möglich.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine Seiten-Gesamtansicht eines Ausführungsbeispieles einer Werkzeugmaschine, teilweise geschnitten, entlang der Linie I-I von Fig. 2;
- Fig. 2: eine Draufsicht auf die Werkzeugmaschine gemäß Fig. 1;
- Fig. 3: in stark vergrößertem Maßstab, ebenfalls in Draufsicht eine Ansicht eines Werkzeugwechslers an einer Spindel der Werkzeugmaschine gemäß den Figuren 1 und 2, in einer ersten Arbeitsstellung;
- Fig. 4: den Werkzeugwechsler gemäß Fig. 3, jedoch in einer anderen Arbeitsstellung;
- Fig. 5: in gegenüber Fig. 1 und Fig. 2 vergrößertem Maßstab eine Draufsicht auf ein Werkzeugmagazin der Werkzeugmaschine gemäß Fig. 1 und 2;
- Fig. 6: in gegenüber Fig. 5 weiter vergrößertem Maßstab eine Seitenansicht, geschnitten entlang der Linie VI-VI von Fig. 7 einer Förderkette des Werkzeugmagazins gemäß Fig. 5;
- Fig. 7: eine Draufsicht auf die Förderkette gemäß Fig. 6;
- Fig. 8: eine schematisierte Darstellung eines in einer Lade-/Entladeposition des Werkzeugmagazins gemäß Fig. 5 befindlichen Werkzeughalters mit zugehörigem Transfer-Greifer, zur Darstellung von Einzelheiten des in der Lade-/Entladeposition gehaltenen Werkzeughalters;
- Fig. 9: in gegenüber Fig. 8 leicht verkleinertem Maßstab eine schematische Darstellung des in Lade-/Entladeposition befindlichen Werkzeughalters in einer ersten Arbeitsstellung;
- Fig. 10: die Anordnung gemäß Fig. 9, jedoch in einer zweiten Arbeitsposition;
- Fig. 11: die Anordnung gemäß Fig. 9, jedoch in einer dritten Arbeitsposition; und
- Fig. 12: die Anordnung gemäß Fig. 9, jedoch in einer vierten Arbeitsposition.

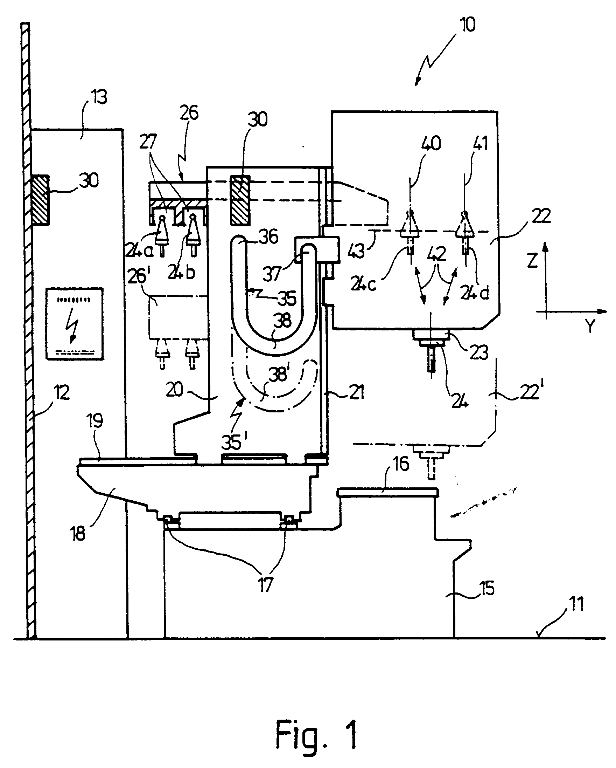

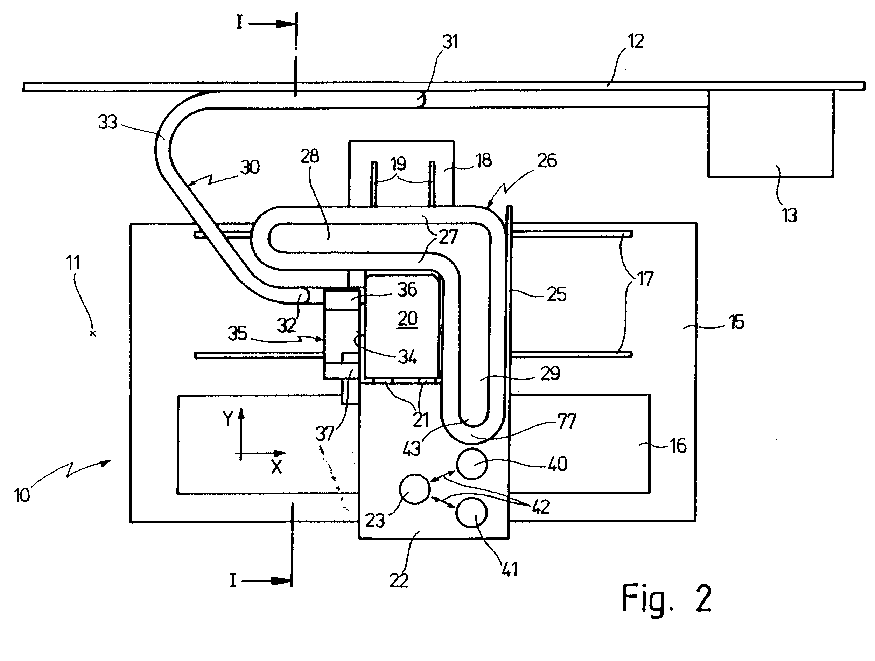

In den Figuren 1 und 2 ist mit 10 ingesamt eine Werkzeugmachine bezeichnet, und zwar ein numerisch gesteuertes Bearbeitungszentrum, wie es zum vollautomatischen Bearbeiten von Werkstücken eingesetzt wird. Bearbeitungszentren der hier interessierenden Art dienen im wesentlichen zur Ausführung von Bohr- und Fräsarbeiten.

Die Werkzeugmachine 10 steht auf einem Fundament 11 einer Maschinenhalle oder dergleichen. Auf ihrer Rückseite ist die Werkzeugmaschine 10 mit einer Wand 12 von ihrer Umgebung abgetrennt. Weitere Wände können ebenfalls vorgesehen sein, um die Werkzeugmaschine 10 auch zur Seite, nach vorne oder gar nach oben hin zu kapseln. Derartige Wände sind bekannt und der Übersichtlichkeit halber in der Zeichnung nicht dargestellt.

An der Wand 12 befindet sich ein üblicher Installationskasten 13, über den die Werkzeugmaschine mit Signalen und Energie, d.h. im wesentlichen Strom, Hydraulikflüssigkeit, Druckluft, Wasser und dergleichen versorgt werden kann.

Die Werkzeugmaschine 10 ruht auf einem Maschinenbett 15, das auf der Vorderseite der Maschine 10 einen langgestreckten Werkstücktisch 16 aufweist. Im dargestellten Ausführungsbeispiel ist die Werkzeugmaschine 10 eine Langbett-Maschine mit feststehendem Werkstücktisch 16. Es versteht sich jedoch, daß der Werkstücktisch 16 ebenfalls in sich beweglich ausgebildet sein kann.

Auf der Rückseite des Werkstücktischs 16 ist das Maschinenbett 15 mit Schienen 17 versehen, die parallel zum Werkstücktisch 16 verlaufen. Die Schienen 17 bilden die sogenannte X-Achse der Werkzeugmaschine 10.

Auf den X-Schienen 17 läuft ein Schlitten 18, der bspw. mittels einer Spindel, eines Zahnriemens oder dergleichen angetrieben wird.

Auf der Oberseite des X-Schlittens 18 verlaufen ebenfalls Schienen 19, die im rechten Winkel zu den X-Schienen 17 angeordnet sind. Die Schienen 19 definieren damit die sogenannte Y-Achse der Werkzeugmaschine 10. Auf den Y-Schienen 19 läuft ein weiterer Schlitten 20, der üblicherweise als Fahrständer bezeichnet wird. Die Werkzeugmaschine 10 bezeichnet man daher auch als Fahrständermaschine.

Auf der Vorderseite des Fahrständers 20 befinden sich vertikal verlaufende Schienen 21, die zu den Schienen 17 und 19 im rechten Winkel verlaufen und die sogenannte Z-Achse der Werkzeugmaschine 10 definieren.

Auf den Z-Schienen 21 des Fahrständers 20 läuft ein Schlitten 22, der üblicherweise als Spindelstock bezeichnet wird.

Der Spindelstock 22 ist mit einer vertikalachsigen Spindel 23 versehen. In Fig. 1 ist zu erkennen, daß in die Spindel 23 ein Werkzeug 24 eingespannt ist.

Insoweit handelt es sich bei der Werkzeugmaschine 10 im Rahmen der bisherigen Beschreibung um ein Bearbeitungszentrum herkömmlicher Bauart.

Das Besondere an der Werkzeugmaschine 10 gemäß Fig. 1 und 2 besteht nun darin, daß der Spindelstock 22 mit Halterarmen 25 versehen ist, von denen der Übersichtlichkeit halber in der Zeichnung nur einer in Fig. 2 am rechten Rand des Spindelstocks 22 dargestellt ist. Diese Halterarme 25 tragen ein Werkzeugmagazin 26, das in der Draufsicht der Fig. 2 von L-förmiger Gestalt ist. Das Werkzeugmagazin 26 enthält in an sich bekannter Weise eine Endlosbahn 27 von ebenfalls L-förmiger Gestalt für Werkzeuge 24a, 24b. Der in X-Richtung verlaufende Schenkel 28 des Werkzeugmagazins 26 umschlingt den Fahrständer 20, ohne mit diesem verbunden zu sein. Der in Y-Richtung verlaufende Schenkel 29 des Werkzeugmagazins 26 verläuft, wie Fig. 2 deutlich zeigt, an der dort rechten Seite des Fahrständers 20, ohne diesen jedoch auch auf dieser Seite zu berühren. Das Werkzeugmagazin 26 ist daher insgesamt nur mit dem Spindelstock 20 verbunden und wird mit diesem in Z-Richtung verfahren. Auf diese Weise erreicht man, wie an sich bekannt, eine sogenannte "variable Werkzeugwechselebene".

Wie bereits erwähnt wurde, ist es erforderlich, Signale und Energie vom schematisch angedeuteten Installationskasten 13 auf die bewegten Elemente der Werkzeugmaschine 10 zu übertragen, insbesondere auf den Fahrständer 20 sowie den Spindelstock 22.

Zu diesem Zweck ist die Werkzeugmaschine 10 mit einer in X-Y Richtung wirkenden ersten Energieführungskette 30 versehen. Diese X-Energieführungskette 30 ist, wie Fig. 1 zeigt, am oberen Ende der Werkzeugmaschine 10 angeordnet und verläuft dort zunächst raumfest vom Installationskasten 13 zu einem raumfesten Anlenkungspunkt 31, der sich etwa in X-Richtung auf der halben Länge des Werkstücktischs 16 an der Wand 12 befindet. Vom raumfesten Anlenkungspunkt 31 an geht die bis dahin stationäre X-Energieführungskette 30 in einen in einer horizontalen Ebene flexiblen Abschnitt über, der über eine Schleife 33 frei durch den Raum verläuft und an einem beweglichen Anlenkungspunkt 32 an der freien Seite 34 des Fahrständers 20 ausläuft. Zu diesem Zweck ist die X-Energieführungskette 30 in bekannter Weise so ausgebildet, daß sie zwar in der Horizontalebene in weiten Bereichen gekrümmt werden kann, jedoch in Vertikalrichtung starr ist. Zwischen den Anlenkungspunkten 31 und 32 kragt die X-Energieführungskette 30 daher frei aus, ohne am freien Ende der so gebildeten Schleife 33 nach unten durchzuhängen.

Die X-Energieführungskette 30 führt sämtliche erforderlichen Signale, Energien und Medien, die dem verfahrbaren Fahrständer 20 zugeführt werden müssen, wenn dieser in X-Richtung sowie in Y-Richtung verfahren wird.

Um in entsprechender Weise Energien vom Fahrständer 20 auf den darauf in Z-Richtung verfahrbaren Spindelstock 22 zu übertragen, ist eine zweite Energieführungskette 35 vorgesehen, die in Z-Richtung wirkt.

Die Z-Energieführungskette 35 führt von einem ersten, hinteren Anlenkungspunkt 36 am Fahrständer 20, der sich in konstanter Höhe befindet, zu einem zweiten, vorderen Anlenkungspunkt 37 am Spindelstock 22. Der zweite Anlenkungspunkt 37 an der Rückseite des Spindelstocks 22 ist daher zusammen mit dem Spindelstock 22 in Z-Richtung, d.h. in Vertikalrichtung, verfahrbar.

Dies ist in Fig. 1 dadurch angedeutet, daß der Spindelstock 22 einmal durchgezogen in einer ersten Vertikalposition und einmal als 22' strichpunktiert in einer heruntergefahrenen Stellung eingezeichnet ist. Man erkennt, daß dann die Z-Energieführungskette 35 ihre Position von 35 nach 35' verändert, wobei der erste Anlenkungspunkt 36 (bei insoweit stillstehendem Fahrständer 20) raumfest verbleibt, während der zweite Anlenkungspunkt 37 in Vertikalrichtung nach unten fährt.

Die Anlenkung der X-Energieführungskette 30 im beweglichen Anlenkungspunkt 32 am Fahrständer 20 sowie die Gesamtanordnung der Z-Energieführungskette 35 auf der in Fig. 2 linken Seite 34 des Fahrständers 20 mit den eben beschriebenen Anlenkungspunkten 36 und 37 ist deswegen konstruktiv möglich, weil das Werkzeugmagazin 26, wie oben erläutert, L-förmig ausgebildet ist. Im Gegensatz zu einem bekannten Werkzeugmagazin in U-Form (sogenanntes "Hufeisenmagazin"), das den Fahrständer auf drei Seiten umschließt, ist somit bei der Werkzeugmaschine 10 gemäß Fig. 1 und 2 die in Fig. 2 linke Seite 34 des Fahrständers 20 frei und kann daher für die bereits erwähnten Einbauten der Energieführungsketten 30 und 35 eingesetzt werden.

Es wurde ebenfalls bereits erwähnt und erläutert, daß die Z-Energieführungskette 35, wie man deutlich aus Fig. 1 sieht, nach unten in einer Schleife 38 durchhängt. Dies bedeutet, daß der Raum oberhalb des Fahrständers 20 von Einbauten frei ist. Dies steht im Gegensatz zu anderen bekannten Werkzeugmaschinen, bei denen die Z-Energieführungskette in Vertikalrichtung nach oben geschlauft ist, so daß sie bogenartig von der Oberseite der Werkzeugmaschine nach oben übersteht.

Man erkennt aus Fig. 2 ferner, daß das in der Höhe zusammen mit dem Spindelstock 22 verfahrbare Werkzeugmagazin 26 von seiner Störkontur in der Ansicht gemäß Fig. 2 so ausgelegt ist, daß das freie Ende des X-Schenkels 28 stets innerhalb der Schleife liegt, die von der X-Energieführungskette 30 beim Verfahren des Fahrständers 20 in X- und/oder Y-Richtung gebildet wird. Auf diese Weise kann das gesamte Werkzeugmagazin 26 in Vertikalrichtung durch die von der X-Energieführungskette 30 definierte Horizontalebene hindurchtauchen, ohne daß eine Kollision mit der X-Energieführungskette 30 befürchtet werden muß.

Aus Fig. 2 wird ferner deutlich, daß das vordere freie Ende des Y-Schenkels 29 des Werkzeugmagazins 26 in einer Vorderansicht rechts neben der Spindel 23 ausläuft.

Um gleichwohl einen schnellen und effektiven Werkzeugwechsel im Gegentaktbetrieb vornehmen zu können, ist bei der Werkzeugmaschine 10 vorgesehen, vor dem freien Ende des Y-Schenkels 29 eine erste Übergabeposition 40 und eine zweite Übergabeposition 41 für Werkzeuge 24c bzw. 24d vorzusehen, die im Abstand zueinander auf einer Achse 43 angeordnet sind. Die Achse 43 ist zugleich die Symmetrieachse des Y-Schenkels 29.

Auf diese Weise muß der Werkzeugwechsel, wie mit Pfeilen 42 angedeutet, zwischen der ersten Übergabeposition 40 und der Spindel 23 einerseits sowie der zweiten Übergabeposition 41 und der Spindel 23 andererseits vollzogen werden. Ferner ist es erforderlich, die Werkzeuge 24 beim Werkzeugwechsel aus dem Werkzeugmagazin 26 entlang der Achse 43 zu den Übergabepositionen 40 und 41 zu verfahren bzw. aus diesen Übergabepositionen 40 bzw. 41 wieder in das Werkzeugmagazin 26 einzuholen. Dies wird weiter unten im einzelnen noch beschrieben werden.

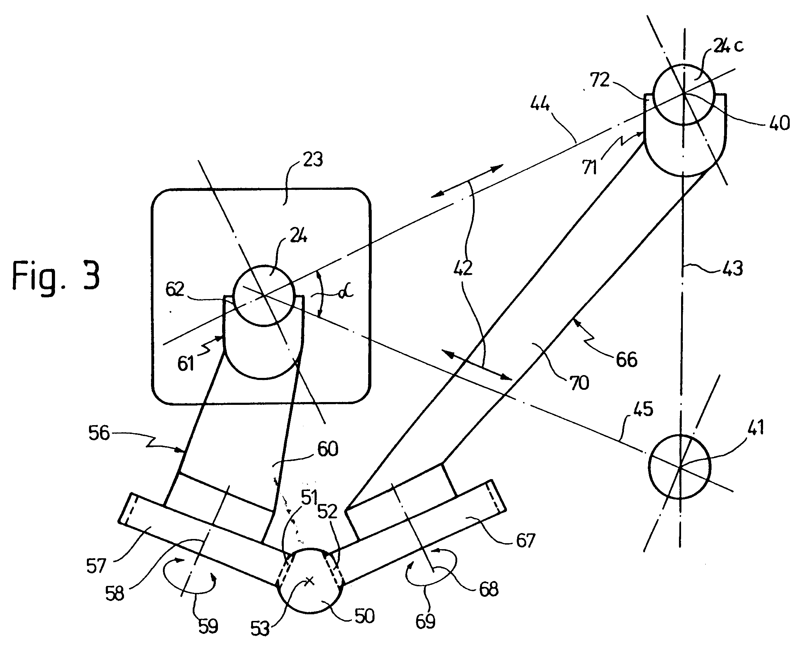

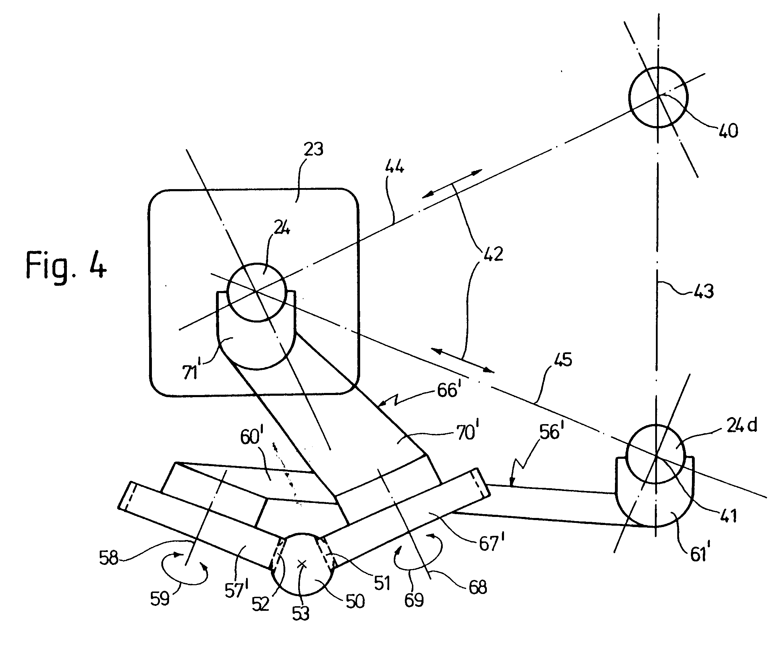

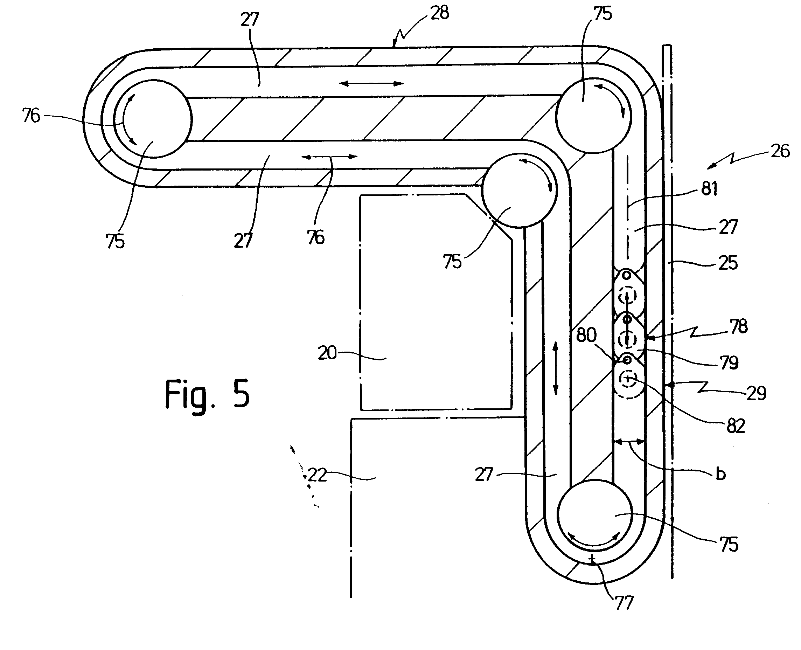

In den Fig. 3 und 4 sind die beiden Arbeitsstellungen eines Werkzeugwechslers schematisch dargestellt, der den soeben skizzierten Werkzeugwechsel zwischen der Spindel 23 und den Übergabepositionen 40 und 41 vollziehen soll. Die Ansicht der Figuren 3 und 5 entspricht derjenigen der Fig. 2, die Figuren 3 und 4 stellen die Verhältnisse lediglich in stark vergrößertem Maßstab dar.

Wie man deutlich sieht, ist die Anordnung dabei so gewählt, daß sich die Achse der Spindel 23 sowie die Achsen der Übergabepositionen 40 und 41 auf einem gleichschenkligen Dreieck befinden, wobei die nicht-gleiche Seite auf der Achse 43 liegt. Die beiden gleichen Schenkel, die in den Figuren 3 und 4 als strichpunktierte Verbindungslinien 44 und 45 dargestellt sind, schließen an der Spindel 23 miteinander einen Winkel α von vorzugsweise 48° ein.

Um einen äußerst einfachen Aufbau des Werkzeugwechslers zu erreichen, ist im Abstand vor der Spindel 23 und in der Darstellung der Fig. 3 nach rechts gegenüber dieser versetzt eine vertikalachsige Zahnstange 50 vorgesehen. Die Zahnstange 50 ist in Längsrichtung mit einer ersten Zahnung 51 sowie einer zweiten Zahnung 52 versehen, die am Umfang der Zahnstange 50 symmetrisch zueinander versetzt angeordnet sind. Die Zahnstange 50 ist in Richtung ihrer vertikalen Achse 53 verfahrbar und zwar mit einer periodischen Hub- und Senkbewegung. Hierzu wird vorzugsweise ein sogenanntes Sinusgetriebe eingesetzt, das dafür sorgt, daß die Richtungsumkehr an dem oberen und dem unteren Totpunkt mit stetiger Bewegung vollzogen wird.

Die Zahnstange 50 dient zum gegenläufigen Antreiben eines ersten Wechslerarms 56 sowie eines zweiten Wechslerarms 66.

Die Wechslerarme 56, 66 sind zum Antrieb jeweils mit einem Ritzel 57 bzw. 67 versehen. Die Ritzel 57, 67 kämmen mit den Zahnungen 51 bzw. 52. Dabei ist die Anordnung so gewählt, daß die Ritzel 57, 67 in der Darstellung der Fig. 3 und 4 mit der X-Richtung einen Winkel von jeweils vorzugsweise 24° einschließen. Dies bedeutet, daß die Achse 58 des Ritzels 57 senkrecht auf der Verbindungslinie 45 steht, während die Achse 68 des Ritzels 67 senkrecht auf der Verbindungslinie 44 steht.

Die Ritzel 57, 67 werden bei einer Vertikalverschiebung der Zahnstange 50 gegenläufig um ihre Achsen 58 bzw. 68 gedreht, wie mit Pfeilen 59 bzw. 69 angedeutet.

Auf diese Weise werden Arme 60 bzw. 70 der Wechslerarme 56 bzw. 66 verschwenkt, wobei die Arme 60, 70 in an sich bekannter Weise als Parallelogrammgestänge ausgebildet sind (Einzelheiten der Übersichtlichkeit halber nicht dargestellt).

Die Arme 60, 70 sind an ihren freien Enden mit Greifern 61, 71 versehen, die wiederum in Finger 62, 72 auslaufen.

Bei der Darstellung gemäß Fig. 3 reicht der erste Wechslerarm 56 zur Spindel 23, wo die Finger 62 des Greifer 61 das Werkzeug 24 bzw. Werkzeughalter umfassen.

Demgegenüber erstreckt sich der zweite Wechslerarm 66 zur ersten Übergabeposition 40, wo der Greifer 71 mit den Fingern 72 das Werkzeug 24c bzw. Werkzeughalter umfaßt. Die Achsen der Greifer 61, 71 sind dabei parallel zueinander ausgerichtet und gemeinsam parallel zur Verbindungsachse 43 der Übergabepositionen 40 und 41.

Wenn nun die Zahnstange 50 senkrecht zur Zeichenebene der Figuren 3 und 4 in ihre entgegengesetzte Endlage verschoben wird, so drehen sich die Ritzel 57 und 67 gegenläufig, mit der Folge, daß beide Wechslerarme 56 und 66 gegensinnig verschwenkt werden.

Das freie Ende des ersten Wechslerarmes 56, d.h. der Greifer 61 wird nun entlang der Verbindungslinie 45 verschwenkt, bis er gemäß Fig. 4 die zweite Übergabeposition 41 erreicht hat.

In entsprechender Weise wird gegenläufig der zweite Wechslerarm 66 so verschwenkt, daß sein Greifer 71 aus der Anfangsstellung der ersten Übergabeposition 40 zur Spindel 23 geführt wird, wie man in Fig. 4 erkennt. Die Bewegung des Greifers 71 vollzieht sich dabei entlang der Verbindungslinie 44.

Bei einem praktischen Ausführungsbeispiel befinden sich die Übergabepositionen 40 und 41 oberhalb der sich nach unten öffnenden Spindel 23, so daß die Greifer 61 bzw. 71 beim Werkzeugwechsel gegenläufig jeweils etwa einen Viertelkreis durchmessen, wobei die Bewegungsbahn des Viertelkreises im Bereich der Übergabepositionen 40, 41 in vertikaler Richtung endet, während sie im Bereich der Spindel 23 in eine horizontale Bewegung ausläuft.

Wie man aus der vorstehenden Schilderung erkennen kann, ist der Bewegungsablauf der Wechslerarme 56 und 66 extrem einfach, ebenso wie der Betätigungsmechanismus der Zahnstange 50 auf einfachste Weise ausgebildet und aktiviert werden kann. Diese Einfachheit von Konstruktion und Bewegungsablauf erkauft man sich allerdings dadurch, daß die Wechslerarme 56, 66 entgegen bekannten Konstruktionen von Bearbeitungszentren nicht beide zwischen denselben Endlagen hin- und herverschwenkt werden, sondern daß vielmehr für jeden Wechslerarm 56, 66 eine separate Übergabeposition vorgesehen ist, nämlich die erste Übergabeposition 40 für den zweiten Wechslerarm 66 und die erste Übergabeposition 41 für den ersten Wechslerarm 56. Diese Übergabepositionen 40, 41 sind voneinander beabstandet und machen somit gesonderte Transfermittel erforderlich. Dies wird weiter unten im einzelnen noch geschildert werden.

In Fig. 5 ist das L-förmige Werkzeugmagazin 26 nochmals in Draufsicht mit weiteren Einzelheiten dargestellt. Man erkennt, daß sowohl an den freien Enden der Schenkel 28, 29 als auch im Verbindungspunkt der Schenkel 28, 29 Umlenk- und Fördereinheiten 75 vorgesehen sind, um den Transport der Werkzeuge bzw. Werkzeughalter entlang der Endlosbahn 27 sicherzustellen, wie mit Pfeilen 76 angedeutet.

Weiterhin ist in Fig. 5 mit 77 eine Lade- und Entladeposition am vorderen freien Ende des Y-Schenkels 29 eingezeichnet.

Ferner erkennt man aus Fig. 5, daß dort der X-Schenkel 28 länger ist als der Y-Schenkel 29. Dies ist deswegen möglich und zweckmäßig, weil auf der Rückseite des Fahrständers 20 in X-Richtung mehr Platz zur Verfügung steht als seitlich neben dem Fahrständer 20 in Y-Richtung. Man kann daher durch entsprechende Verlängerung des X-Schenkels 28 den Platzverlust wettmachen, den man dadurch in Kauf genommen hat, daß man die in Fig. 5 linke Seite von Fahrständer 20 und Spindelstock 22 frei von einem Abschnitt des Werkzeugmagazins gestaltet hat.

Eine Besonderheit des Werkzeugmagazins 26 besteht darin, daß die Werkzeuge bzw. Werkzeughalter anders als bei herkömmlichen Magazinen in einer Kette 78 und nicht an einer Kette transportiert werden. Die Kette 78 besteht aus Kettengliedern 79, die miteinander in Kettengelenken 80 gelenkig verbunden sind.

Bei herkömmlichen Ketten in Werkzeugmagazinen befinden sich die Werkzeuge nämlich in greiferartigen Aufnahmen, die sich senkrecht zur Längsmittelebene der Kette erstrecken. Dies führt dazu, daß im Bereich von Kurven die jeweils außen liegenden Werkzeuge starken Fliehkräften ausgesetzt sind. Dies erfordert besondere Sicherungsmaßnahmen, um ein Herausfliegen von Werkzeugen zu verhindern. Andererseits besteht bei solchen herkömmlichen Werkzeugmagazinen das Problem, daß beim Durchfahren von Innenkurven die Greifer miteinander in Kollision geraten können. Man muß deshalb bei derartigen herkömmlichen Ketten genügend Abstand zwischen den Greifelementen vorsehen, um derartige Kollisionen zu verhindern. Dies führt jedoch andererseits zu einer Verminderung der Anzahl von Werkzeugen, die in einer solchen Kette untergebracht werden können.

Im Gegensatz dazu ist die Kette 78 gemäß Fig. 5 so ausgebildet, daS die Werkzeuge mit ihrer Achse 82 in Speicherplätzen 83 in der Längsmittelebene 81 der Kette 78 laufen. Auf diese Weise können die Werkzeuge mit dichtem Abstand zueinander geführt werden, und die erwähnten Probleme im Bereich von Außen- und Innenkurven treten nicht auf.

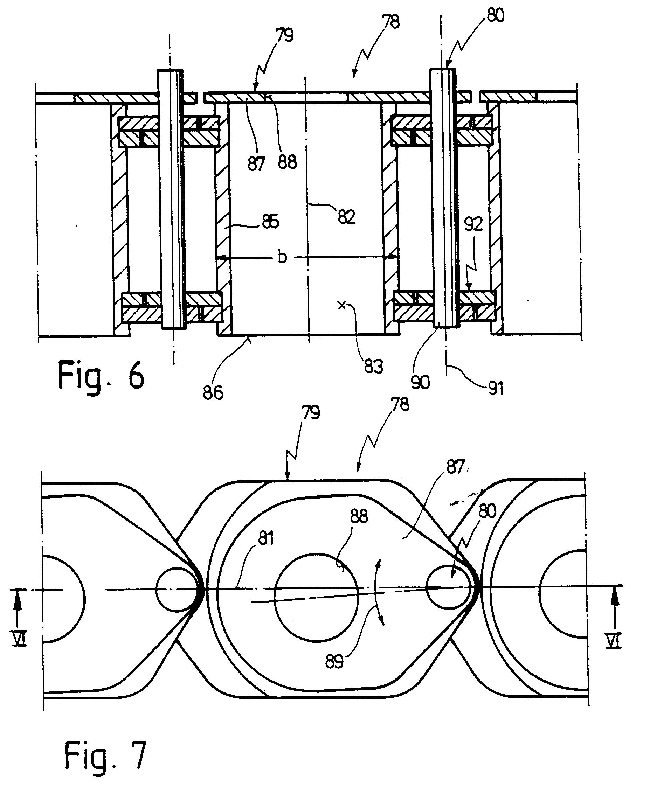

In den Figuren 6 und 7 sind die im vorliegenden Zusammenhang interessierenden Einzelheiten der Kette 78, soweit zum Verständnis erforderlich, dargestellt.

Man erkennt, daß jedes Kettenglied 79 im wesentlichen aus einer zylindrischen Hülse 85 besteht, die nach unten offen ist, wie mit 86 angedeutet. Jede Hülse 85 bildet somit einen Speicherplatz 83 für ein Werkzeug 24, wie in Fig. 6 durch die Werkzeugachse 82 angedeutet. Am oberen Ende ist die Hülse 85 hingegen mit einem Deckel 87 verschlossen. Der Deckel 87 ist jedoch um die Achse des Kettengelenks 80 verschwenkbar, wie mit einem Pfeil 89 in Fig. 7 angedeutet. Im Deckel 87 befindet sich eine Riegelöffnung 88, die in der in Fig. 7 dargestellten verschwenkten Stellung des Deckels 87 einen Werkzeughalter in der Hülse 85 in Vertikalrichtung verriegelt, wie noch beschrieben werden wird. Wenn man hingegen den Deckel 87 aus der in Fig. 7 dargestellten verschwenkten Stellung in eine zur Längsmittelebene 81 symmetrische Stellung zurückschwenkt, so gibt die Riegelöffnung 88 das entsprechende Gegenelement des Werkzeughalters frei, der auf diese Weise nach unten aus der Hülse 85 entnommen werden kann.

Die Kettengelenke 80 werden im wesentlichen durch einen Gelenkstift 90 gebildet, der eine Achse 91 des Kettengelenkes 80 definiert. Die Gelenkstifte 90 sind mit einem scharnierartigen Gelenk 92 versehen, um benachbarte Hülsen 85 schwenkbar miteinander zu verbinden. Wie bereits erwähnt wurde, bilden die Gelenkstifte 90 zugleich die Schwenkachse für die Deckel 87.

Die Betätigungselemente zum Verschwenken des Deckels 87 sind der Übersichtlichkeit halber nicht im einzelnen dargestellt. So wird man die Deckel 87 beispielsweise in der Sperrichtung (Fig. 7) federbelastet halten und kann sie dann mittels einer pneumatischen Kolben-Zylinder-Einheit, die an einem geeigneten Vorsprung des Deckels 87 angreift, kurzfristig in die Entriegelstellung bringen.

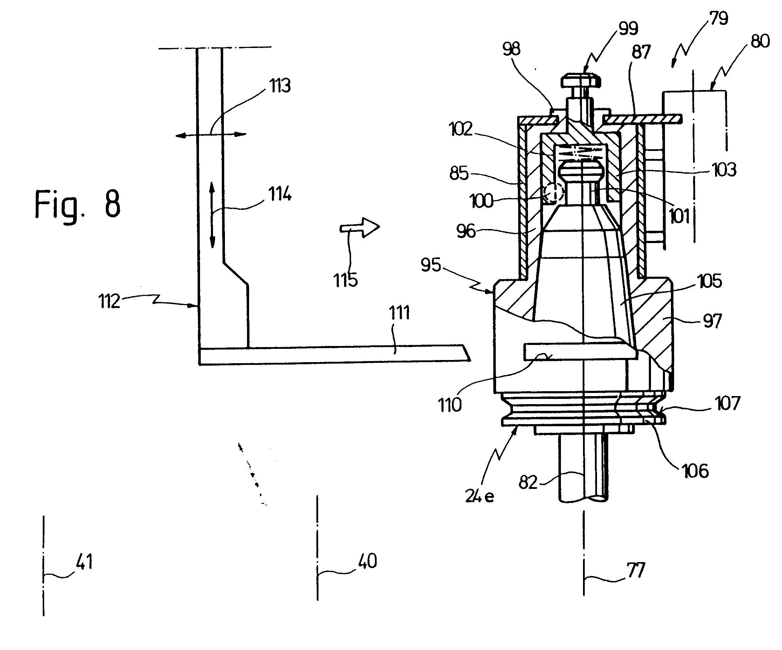

Fig. 8 zeigt, daß die Werkzeuge bzw. Werkzeughalter 24e nicht unmittelbar in die Hülsen 85 der Kettenglieder 79 eingesetzt werden.

Vielmehr ist im Rahmen der vorliegenden Erfindung vorgesehen, die Werkzeuge 24e ihrerseits zunächst in einen Köcher 95 einzusetzen, der dann seinerseits in die Hülsen 85 eingeführt wird.

Die Köcher 95 bestehen im mittleren Bereich aus einem hohlzylindrischen Hals 96 kleineren Durchmessers sowie im unteren Bereich aus einem näherungsweise hohlzylindrischen Sockel 97. Das obere Ende des Köchers 95 wird zunächst durch einen Riegelkragen 98 gebildet, der im wesentlichen aus einer verdickten Ringschulter sowie einer dahinterliegenden Ringnut besteht. Der Riegelkragen 98 ist so dimensioniert, daß er in der Verriegelstellung des Deckels 87 durch diesen axial in der zylindrischen Hülse 85 gesichert ist, während in der Entriegelstellung des Deckels 87 die Riegelöffnung 88 etwas größer ist als der Riegelkragen 98, so daß dieser zusammen mit dem Köcher 95 nach unten aus der zylindrischen Hülse 85 entnommen werden kann.

Im Riegelkragen 98 läuft ein Betätigungsknopf 99 für eine nur schematisch angedeutete Kugelrastung 100 des Köchers 95. Die Kugelrastung 100 verfügt in an sich bekannter Weise über eine radial freigebbare bzw. sperrbare Kugel, die in eine Ringnut eines üblichen Kopfes 101 eines Werkzeughalters greifen und diesen damit axial verriegeln oder freigeben kann.

Zur Betätigung der Kugelrastung 100 dient eine mittels einer Feder 102 belastete Riegelhülse 103. Die Riegelhülse 103 ist dadurch betätigbar, daß der Betätigungsknopf 99 in der Darstellung der Fig. 8 nach unten gedrückt wird. Dann wird die Feder 102 zusammengedrückt, und die Kugel der Kugelrastung 100 kann in eine seitliche Ausnehmung der Riegelhülse 103 einfallen.

Wenn dies der Fall ist, kann der Werkzeughalter 24e nach unten aus dem Köcher 95 entnommen werden, während er ansonsten axial in diesem fixiert ist.

Zu diesem Zweck sind auch der untere Abschnitt des Halses 96 sowie der Sockel 97 innen in ihrer Formgebung an einen Kegel 105 des Werkzeugs 24e angepaßt.

Die Anordnung ist dabei so gewählt, daß ein Ringflansch 106 mit der üblichen V-Rille 107 des Werkzeuges 23e nach unten aus dem Sockel 97 des Köchers 95 herausragt.

Es ist ferner in Fig. 8 noch deutlich zu erkennen, daß der Sockel 97 des Köchers 95 seitlich mit einer Nut 110 versehen ist.

Diese Nut 110 ist an Finger 111 eines Transfer-Greifers 112 angepaßt. Es ist damit möglich, den Köcher 95 mittels der Finger 111 des Transfer-Greifers 112 formschlüssig zu erfassen und in horizontaler Richtung sowie in vertikaler Richtung zusammen mit dem Transfer-Greifer 112 zu verfahren, wie in Fig. 8 mit Pfeilen 113 und 114 angedeutet ist.

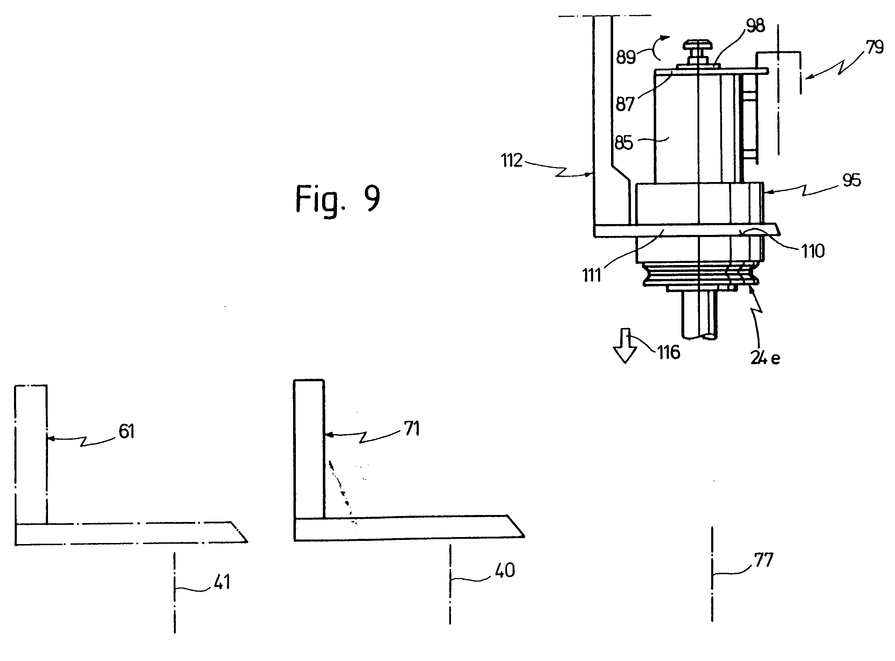

Fig. 8 zeigt eine Ausgangsstellung, in der das Werkzeug 24e zusammen mit dem Köcher 95 aus dem Kettenglied 79 der Kette 78 im Werkzeugmagazin 26 entnommen und anschließend zur ersten Übergabeposition 40 verbracht werden soll. Der sich dabei einstellende Bewegungsablauf wird nachstehend anhand der Figuren 9 bis 12 erläutert.

Zur Einleitung des Bewegungsvorganges aus der Position gemäß Fig. 8 wird der Transfer-Greifer 112 zunächst in horizontaler Richtung auf den Köcher 95 zu verfahren, wie mit einem Pfeil 115 in Fig. 8 dargestellt ist. Hierzu dient beispielsweise eine nicht dargestellte pneumatische Kolben-Zylinder-Einheit herkömmlicher Bauart.

Wenn der Transfer-Greifer 112 insoweit seine Endposition erreicht hat, fassen die Finger 111 in die Nut 110 des Köchers 95, wie in Fig. 9 (dort in leicht verkleinertem Maßstab) zu erkennen ist, und werden dort verrastet.

Fig. 9 zeigt zusätzlich den in der ersten Übergabeposition 40 auf das Werkzeug 24e wartenden Greifer 71 des zweiten Wechslerarms 66. Zur Veranschaulichung des Gesamtvorganges ist strichpunktiert auch die zweite Übergabeposition 41 und dort der Greifer 61 des ersten Wechslerarmes 56 eingezeichnet, obwohl dieser Greifer 61 des ersten Wechslerarms 56 in dem in Fig. 9 dargestellten Augenblick im Bereich der Spindel 23 zu finden ist (vergleiche die insoweit zeitlich übereinstsimmende Fig. 3).

Wenn der Transfer-Greifer 112 die in Fig. 9 dargestellte Position erreicht hat, wird mittels einer (nicht dargestellten) Betätigungseinheit der Deckel 87 in Richtung des Pfeiles 89 aus der Verriegelstellung der Fig. 7 in die Entriegelstellung gebracht, so daß der Riegelkragen 98 freigegeben wird.

Der Transfer-Greifer 112 kann nun nach unten verfahren werden, wie in Fig. 9 mit einem Pfeil 116 angedeutet. Dann wird der Köcher 95 mit dem Werkzeughalter 24e nach unten aus der Hülse 85 herausgezogen.

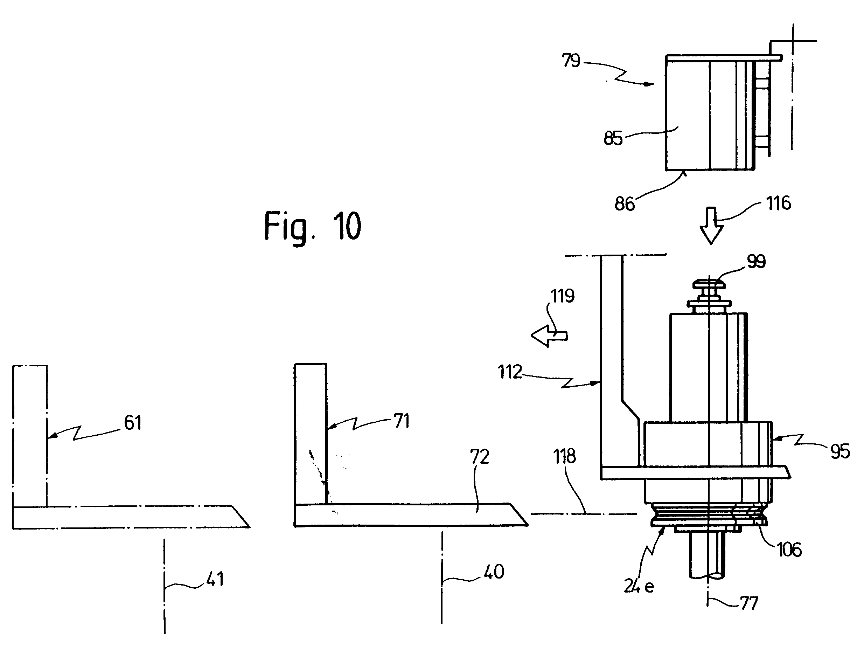

Dies ist in Fig. 10 dargestellt, wo zu sehen ist, daß der Transfer-Greifer 112 nun eine untere Position erreicht hat, in der der Köcher 95 die Hülse 85 verlassen hat, so daß sich nun der Betätigungsknopf 99 unterhalb der Öffnung 86 befindet. Der Weg des Köchers 95 nach unten (Pfeil 116) wird nun so lange fortgesetzt, bis sich der Ringflansch 106 des Werkzeuges 24e in einer Höhe mit den Fingern 72 des Greifers 71 befindet. Dies ist in Fig. 10 mit einer strichpunktierten Linie 118 angedeutet.

Mittels einer geeigneten Steuerung wird nun der Transfer-Greifer 112 in horizontaler Richtung verfahren, und zwar in der Darstellung der Fig. 10 nach links.

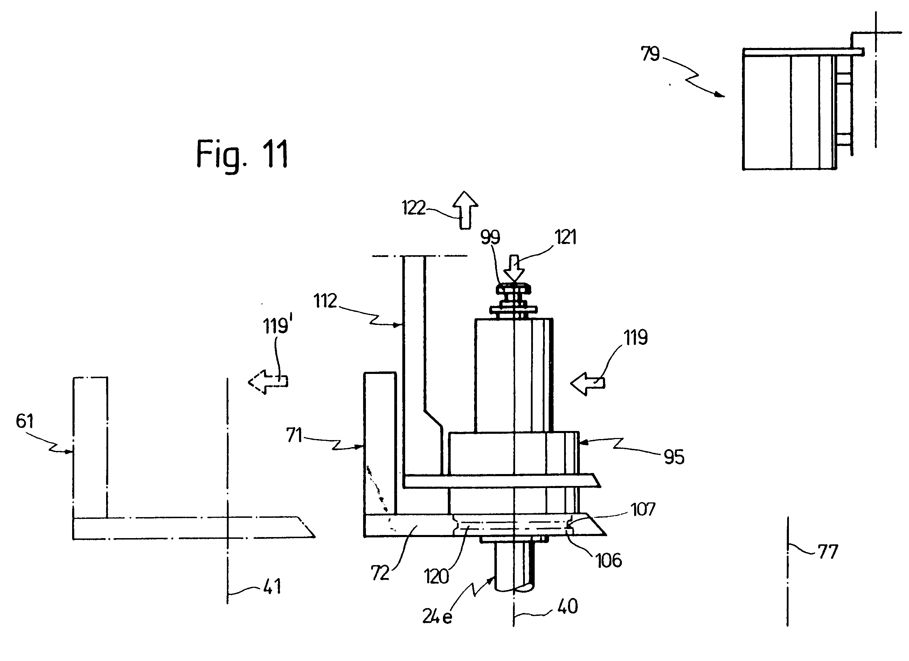

Dies bewirkt, wie Fig. 11 zeigt, daß der Ringflansch 106 mit der V-Rille 107 in Eingriff mit Stegen 120 gelangt, die an der Innenseite der Finger 72 des Greifers 71 angeordnet sind.

In diesem Augenblick ist also das Werkzeug 24e in vertikaler Richtung auch durch die Finger 72 des Greifers 71 gehalten.

Sobald dies der Fall ist, kann mit einer weiteren (ebenfalls nicht dargestellten) Betätigungseinheit der Betätigungsknopf 99 nach unten gedrückt werden, wie in Fig. 11 mit einem Pfeil 121 angedeutet. Wie anhand der Fig. 8 erläutert wurde, bewirkt ein Niederdrücken des Betätigungsknopfes 99, daß die formschlüssige Verbindung der Kugelrastung 100 zwischen Köcher 95 und Werkzeug 24e aufgehoben wird. Es ist daher möglich, nach dem Niederdrücken des Betätigungsknopfes 99 den Transfer-Greifer 112 nach oben zu verfahren, ohne das Werkzeug 24e mitzunehmen, das in diesem Augenblick von den Fingern 72 des Greifers 71 gehalten wird. Diese Bewegung des Transfer-Greifers 112 ist in Fig. 11 mit einem Pfeil 122 angedeutet.

Fig. 11 zeigt schließlich noch mit einem Pfeil 119', daß dieselbe Ausgangslage der Fig. 11 auch in bezug auf den Greifer 61 des ersten Wechslerarms 56 erreicht werden könnte, wenn man den Transfer-Greifer 112 weiter nach links in Fig. 11 verfahren hätte. Dies ist dann angezeigt, wenn das Werkzeug in den Greifer 61 überführt werden soll, was der Position des Werkzeugwechslers gemäß Fig. 4 entsprechen würde.

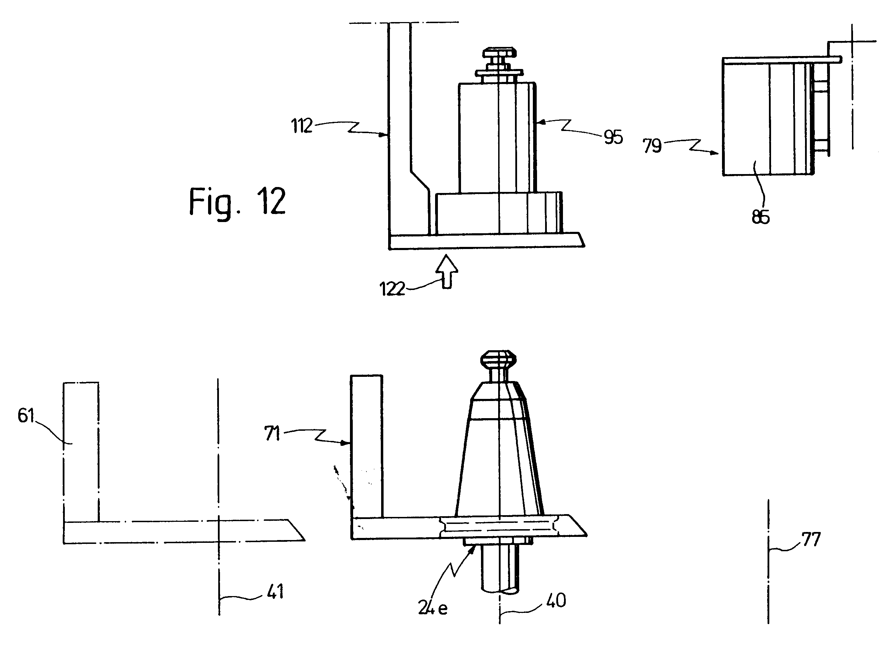

Wenn man sich nun jedoch noch einmal der in Fig. 11 durchgezogen dargestellten Anordnung zuwendet, so entsteht nach dem Abheben des Transfer-Greifers 112 mit Köcher 95 in Richtung des Pfeiles 122 eine Situation, die in Fig. 12 dargestellt ist. Man erkennt, daß der Köcher 95 nunmehr vom Werkzeug 24e abgehoben ist, so daß das Werkzeug 24e jetzt durch Betätigen des Werkzeugwechslers in die Spindel 23 überführt werden kann.

Da nun im Gegenzug das für den vorausgegangenen Bearbeitungsvorgang benötigte Werkzeug aus der Spindel 23 gegenläufig in die zweite Übergabeposition 41 verbracht wird, muß nun als nächstes (nicht mehr dargestellt) der Transfer-Greifer 112 aus der Position der Fig. 12 nach links und dann nach unten verfahren, um das aus der Spindel 23 ausgewechselte Werkzeug 24 mit dem nunmehr leeren Köcher 95 zu ergreifen. Der Transfer-Greifer 112 wird dann in der Darstellung der Fig. 12 nach rechts bewegt, bis er in die Lade-/Entladeposition 77 gelangt, um dann nach oben verfahren zu werden. Das von der Spindel 23 kommende Werkzeug 24, das sich nunmehr im Köcher 95 befindet, wird dann zusammen mit diesem in seine zugehörige Hülse eingesetzt, die zwischenzeitlich durch Verfahren der Kette 78 in die Lade-/Entladeposition gebracht wurde.

Für den darauffolgenden Werkzeugwechsel vollziehen sich die gleichen Schritte dann sinngemäß in umgekehrter Reihenfolge.

Aus der vorstehenden Darlegung folgt ferner, daß die Bewegungsabläufe beim Werkzeugwechsel, das heißt sowohl beim Entladen eines Werkzeuges aus dem Werkzeugmagazin in die Spindel als auch beim Laden eines aus der Spindel kommenden Werkzeuges in das Magazin prinzipiell dieselben Bewegungsabläufe vorkommen. Die Differenzierung nach den beiden Übergabepositionen 40 und 41 ist zwar jeweils zu beachten, andererseits aber mit sehr einfachen Mitteln beherrschbar. So kann man nämlich zum Verfahren des Transfer-Greifers 112 in horizontaler Richtung (Darstellung der Figuren 8 bis 12) zwei in Kaskade geschaltete Pneumatik-Zylinder einsetzen, von denen beim Anfahren der oder aus der ersten Übergabeposition 40 nur einer betätigt wird, während beim Anfahren der aus der zweiten Übergabeposition 41, jeweils relativ zur Lade-/Entladeposition 77, beide Zylinder nacheinander betätigt werden, deren Verfahrwege sich somit addieren.

Es versteht sich ferner, daß die geschilderten Bewegungsabläufe selbstverständlich auch jeweils in kinematischer Umkehr vorgesehen werden können.

So ist es beispielsweise möglich, die Greifer 61, 71 zunächst in einer Warteposition zu halten, in der die Finger 72 mit der V-Rille 107 in eine Horizontalebene fluchten, wenn sich das Werkzeug noch im Köcher 95 und dieses noch in der Hülse 85 befindet. Dann braucht der Transfer-Greifer 112 jeweils nur in Horizontalrichtung verfahren zu werden. Andererseits muß dann zum Ausfahren des Werkzeuges aus dem Köcher 95 der jeweilige Greifer 71 bzw. 61 nach unten verfahren werden, bis die Positionen gemäß Fig. 11 und 12 erreicht sind. Wie man also leicht sieht, können die Bewegungsabläufe durchaus mannigfaltig variiert werden, ohne daß sich am Kern der Arbeitsweise der Vorrichtung etwas ändert.

## Patentansprüche

1. Werkzeugmaschine mit einem Werkzeugwechsler zum Überführen von Werkzeugen (24) zwischen einer vertikalachsigen Spindel (23) und einer Lade-/Entladeposition (77) eines Werkzeugmagazins (26), wobei die Lade-/Entladeposition (77) sich in einer Vorderansicht der Werkzeugmaschine (10) oberhalb der Spindel (23) und seitlich zu dieser versetzt befindet, und ferner der Werkzeugwechsler zwei Wechslerarme (56, 66) umfaßt, die im Gegentaktbetrieb jeweils zu einem Überführen eines ersten Werkzeuges (24) von der Spindel (23) zur Lade-/Entladeposition (77) und eines zweiten Werkzeuges (24c) von der Lade-/Entladeposition (77) zur Spindel (23) beitragen, dadurch gekennzeichnet, daß die Wechslerarme (56, 66) jeweils nur um eine Achse (58, 68) drehbar sind, daß jeder der Wechslerarme (56, 66) mit einer separaten Übergabeposition (40, 41) zusammenarbeitet, wobei sich die beiden Übergabepositionen (40, 41) in unterschiedlichem Abstand vor der Lade-/Entladeposition (77) befinden, und daß der Werkzeugwechsler ferner eine Transfereinrichtung zum Überführen der Werkzeuge (24e) zwischen der Lade-/Entladeposition (77) sowie wahlweise einer der Übergabepositionen (40, 41) umfaßt.

2. Werkzeugmaschine nach Anspruch 1, dadurch gekennzeichnet, daß die Übergabeposition (40, 41) und die Spindel (23) in einer Horizontalebene (X-Y) auf den Eckpunkten eines gleichschenkligen Dreiecks (43, 44, 45) angeordnet sind, dessen Scheitel durch die Spindel (23) gebildet wird.

3. Werkzeugmaschine nach Anspruch 2, dadurch gekennzeichnet, daß der Scheitelwinkel (α) des Dreiecks (43, 44, 45) etwa 48° beträgt.

4. Werkzeugmaschine nach Anspruch 2 oder 3, dadurch gekennzeichnet, daß Greifer (61, 71) der Wechslerarme (56, 66) beim Werkzeugwechsel nur in Vertikalebenen bewegt werden, die die gleichen Schenkel (44, 45) des Dreiecks. (43, 44, 45) enthalten.

5. Werkzeugmaschine nach Anspruch 3 oder 4, dadurch gekennzeichnet, daß die Drehachsen (58, 68) der Wechslerarme (56, 66) miteinander einen Winkel von etwa 48° einschließen.

6. Werkzeugmaschine nach einem oder mehreren der Ansprüche 1 bis 5, dadurch gekennzeichnet, daß die Wechslerarme (56, 66) mittels Ritzeln (57, 67) angetrieben werden, die mit zueinander versetzten Zahnungen (51, 52) einer Zahnstange (50) kämmen, wobei die Zahnstange (50) in vertikaler Richtung (Z) verfahrbar ist und die Zahnungen (51, 52) über den Umfang der Zahnstange (50) versetzt angeordnet sind.

7. Werkzeugmaschine nach Anspruch 3 und 6, dadurch gekennzeichnet, daß die Zahnungen (51, 52) um etwa 132° versetzt sind.

8. Werkzeugmaschine nach Anspruch 6 oder 7, dadurch gekennzeichnet, daß die Zahnstange (50) mittels eines Sinusgetriebes verfahrbar ist.

9. Werkzeugmaschine nach einem oder mehreren der Ansprüche 1 bis 8, dadurch gekennzeichnet, daß die Transfereinrichtung einen Transfergreifer (112) umfaßt.

10. Werkzeugmaschine nach Anspruch 9, dadurch gekennzeichnet, daß der Transfergreifer (112) in vertikaler (116, 122) und in horizontaler (115, 119) Richtung verfahrbar ist.

11. Werkzeugmaschine nach Anspruch 9 oder 10, dadurch gekennzeichnet, daß die Werkzeuge (24e) während des Transfers in der Transfereinrichtung in Köchern (95) gehalten werden.

12. Werkzeugmaschine nach Anspruch 10 und 11, dadurch gekennzeichnet, daß der Transfergreifer (112) am Köcher (95) angreift.

13. Werkzeugmaschine nach einem oder mehreren der Ansprüche 1 bis 12, dadurch gekennzeichnet, daß das Werkzeugmagazin (26) eine entlang einer Endlosbahn (27) geführte Kette (78) umfaßt, die mit Speicherplätzen (83) für die Werkzeuge (24) versehen ist und die in den Speicherplätzen (83) aufgenommenen Werkzeuge (24) entlang der Endlosbahn (27) verfährt, derart, daß ein vorbestimmter Speicherplatz (83) in die Lade-/Entladeposition (77) des Werkzeugmagazins (26) verfahrbar ist, wobei die Speicherplätze (83) in der Längsmittelebene (81) der Kette (78) angeordnet sind.

14. Werkzeugmaschine nach Anspruch 12 und 13, dadurch gekennzeichnet, daß die Werkzeuge (24) in separaten Köchern (95) derart in der Kette (78) gehalten sind, daß sie mit ihren Achsen (82) in der Längsmittelebene (81) der Kette (78) verfahren werden.

15. Werkzeugmaschine nach Anspruch 13 oder 14, dadurch gekennzeichnet, daß die Kette (78) Kettenglieder (79) umfaßt, die mittels Kettengelenken (80) miteinander verbunden sind, wobei die Kettenglieder (79) eine Hülse (85) zur Aufnahme der Werkzeuge (24) aufweisen.

16. Werkzeugmaschine nach Anspruch 15, dadurch gekennzeichnet, daß die Kette (78) in einer Horizontalebene (X-Y) verläuft, und daß die Hülsen (85) im wesentlichen zylindrisch und nach unten offen (86) sind.

17. Werkzeugmaschine nach Anspruch 16, dadurch gekennzeichnet, daß die Hülsen (85) an ihrer Oberseite mittels eines Deckels (87) verschlossen sind, der mit einer ersten Riegeleinrichtung (88, 89) für die Werkzeuge (24) versehen ist.

18. Werkzeugmaschine nach Anspruch 17, dadurch gekennzeichnet, daß der Deckel (87) in der Horizontalebene (X-Y) verschwenkbar ist und eine Riegelöffnung (88) aufweist, durch die ein dem Werkzeug (24) zugeordnetes Riegelelement (98, 99) steckbar ist, das in einer ersten Schwenkstellung des Deckels (87) in Vertikalrichtung (Z) verriegelt und in einer zweiten Schwenkstellung in Vertikalrichtung (Z) freigegeben ist.

19. Werkzeugmaschine nach Anspruch 18, dadurch gekennzeichnet, daß der Deckel (87) um eine Achse (91) verschwenkbar ist, die zugleich die Achse (91) des Kettengelenks (80) ist.

20. Werkzeugmaschine nach einem oder mehreren der Ansprüche 14 bis 19, dadurch gekennzeichnet, daß die Köcher (95) eine zweite Riegeleinrichtung für die Werkzeuge (24) aufweisen.

21. Werkzeugmaschine nach Anspruch 20, dadurch gekennzeichnet, daß die zweite Riegeleinrichtung eine Kugelrastung (100) umfaßt, die an einem genormten Kopf (101) oberhalb eines Kegels (105) eines Werkzeughalters angreift, und daß die Kugelrastung (100) mittels eines axial gegen Federkraft (102) verschiebbaren Kopfes (99) betätigbar ist.

22. Werkzeugmaschine nach Anspruch 18 und 21, dadurch gekennzeichnet, daß der Betätigungsknopf (99) koaxial zu dem als Riegelkragen (98) ausgebildeten Riegelelement der ersten Riegeleinrichtung (88, 89) angeordnet ist.

23. Werkzeugmaschine nach einem oder mehreren der Ansprüche 13 bis 21, dadurch gekennzeichnet, daß die Kette (78) in der Horizontalebene (X-Y) verläuft, daß die Hülsen (85) im wesentlichen zylindrisch und nach unten offen (86) sind, und daß die Köcher (95) von unten in die Hülsen (85) einsteckbar sind.

24. Werkzeugmaschine nach einem oder mehreren der Ansprüche 1 bis 22, dadurch gekennzeichnet, daß das Werkzeugmagazin (26) in einer Horizontalebene (X-Y) L-förmig ausgebildet ist, wobei ein erster Schenkel (29) des L seitlich vom Fahrständer (20) und einer zweiter Schenkel (28) des L hinter dem Fahrständer (20) angeordnet ist.

25. Werkzeugmaschine nach Anspruch 24, dadurch gekennzeichnet, daß der zweite Schenkel (28) länger als der erste Schenkel (29) ist.

26. Werkzeugmaschine nach Anspruch 24 oder 25, dadurch gekennzeichnet, daß eine nur in einer Ebene flexible erste Energieführungskette (30) von einem ersten, raumfesten Anlenkungspunkt (31) in einer Horizontalebene (X-Y) zu einem zweiten, beweglichen Anlenkungspunkt (32) am Fahrständer (20) geführt ist.

27. Werkzeugmaschine nach Anspruch 26, dadurch gekennzeichnet, daß die erste Energieführungskette (30) in einer Horizontalebene (X-Y) am oberen Ende des Fahrständer (20) angeordnet ist.

28. Werkzeugmaschine nach Anspruch 26 oder 27, dadurch gekennzeichnet, daß die erste Energieführungskette (30) so in einer Schleife (33) in der Horizontalebene (X-Y) angeordnet ist, daß die Schleife (33) sich stets außerhalb einer Störkontur des zweiten Schenkels (28) des Werkzeugmagazins (26) befindet.

29. Werkzeugmaschine nach einem oder mehreren der Ansprüche 24 bis 28, dadurch gekennzeichnet, daß eine zweite Energieführungskette (35) in einer Vertikalebene (Y-Z) von einem dritten Anlenkungspunkt (36) am Fahrständer (20) zu einem vierten Anlenkungspunkt (37) am Spindelstock (22) geführt ist.

30. Werkzeugmaschine nach Anspruch 29, dadurch gekennzeichnet, daß die zweite Energieführungskette (35) an der dem ersten Schenkel (29) des Werkzeugmagazins (26) abgewandten Seite (34) des Fahrständers (20) angeordnet ist.

31. Werkzeugmaschine nach Anspruch 29 oder 30, dadurch gekennzeichnet, daß die zweite Energieführungskette (35) so in einer Schleife (35) in der Vertikalebene (Y-Z) angeordnet ist, daß die Schleife (35) nach unten hängt.

32. Werkzeugmaschine nach Anspruch 31, dadurch gekennzeichnet, daß der dritte Anlenkungspunkt 836) unterhalb des zweiten Anlenkungspunktes (32) liegt.

## Claims

1. A machine tool having a tool changer for transferring tools (24) between a vertical-axis spindle (23) and a loading/unloading position (77) of a tool magazine (26), the loading/unloading position (77) being located, in a front elevational view of the machine tool (10), above the spindle (23) and laterally offset therefrom, the tool changer, further, comprising two changer arms (56, 66) that, in a reciprocating operation, each contribute to transferring a first tool (24) from the spindle (23) to the loading/unloading position (77), and a second tool (24c) from the loading/unloading position (77) to the spindle (23), characterized in that the changer arms (56, 66) are each rotatable only about one axis (58, 68), that each of the changer arms (56, 66) interacts with a separate delivery position (40, 41), the two delivery positions (40, 41) being located at different distances in front of the loading/unloading position (77), and that the tool changer, further, comprises a transfer device for transferring the tools (24e) between the loading/unloading position (77) and, alternatively, one of the delivery positions (40, 41).

2. The machine tool of claim 1, characterized in that the delivery positions (40, 41) and the spindle (23) are arranged in a horizontal plane (X-Y), at the corners of an isosceles triangle (43, 44, 45), the apex thereof being constituted by the spindle (23).

3. The machine tool of claim 2, characterized in that the apex angle (α) of the triangle (43, 44, 45) is approximately 48 degrees.

4. The machine tool of claim 2 or 3, characterized in that grippers (61, 71) of the changer arms (56, 66) during tool changing are moved only in vertical planes containing the equal sides (44, 45) of the triangle (43, 44, 45).

5. The machine tool of claim 3 or 4, characterized in that the rotation axes (58, 68) of the changer arms (56, 66) enclose between them an angle of approximately 48 degrees).

6. The machine tool of one or more of claims 1 to 5, characterized in that the changer arms (56, 66) are driven by means of pinions (57, 67) meshing with toothings (51, 52) being offset from one another on a rack (50), the rack (50) being displaceable in a vertical direction (z), the toothings (51, 52) being arranged offset from one another over a periphery of the rack (50).

7. The machine tool of claims 3 and 6, characterized in that the toothings (51, 52) are offset by approximately 132 degrees.

8. The machine tool of claim 6 or 7, characterized in that the rack (50) is adapted to be displaced by means of a sinusoidal drive gear.

9. The machine tool of one or more of claims 1 to 8, characterized in that the transfer device comprises a transfer gripper (112).

10. The machine tool of claim 9, characterized in that the transfer gripper (112) is adapted to be displaced in the vertical direction (116, 122) and in the horizontal direction (115, 119).

11. The machine tool of claim 9 or 10, characterized in that the tools (24e) are held in sheaths (95) within the transfer device during transfer.

12. The machine tool of claims 10 and 11, characterized in that the transfer gripper (112) engages the sheath (95).

13. The machine tool of one or more of claims 1 to 12, characterized in that the tool magazine (26) comprises a chain (78) guided along an endless path (27) being provided with storage locations (83) for the tools (24) and displacing the tools (24) received within the storage locations (83) along the endless path (27), such that a predetermined storage location (83) can be displaced into the loading/unloading position (77) of the tool magazine (26), the storage locations (83) being arranged in the longitudinal center plane (81) of the chain (78).

14. The machine tool of claim 12 and 13, characterized in that the tools (24) are held in separate sheaths (95) in the chain (78), such that they are displaced with their axes (82) in the longitudinal center plane (81) of the chain (78).

15. The machine tool of claim 13 or 14, characterized in that the chain (78) comprises chain links (79) being joined to one another by means of chain joints (80), the chain links (79) having a sleeve (85) for receiving the tools (24).

16. The machine tool of claim 15, characterized in that the chain (78) runs in a horizontal plane (X-Y), and that the sleeves (85) are substantially cylindrical and open (86) toward the bottom.

17. The machine tool of claim 16, characterized in that the sleeves (85) are closed off at their top by means of a cover (87) being provided with a first locking device (88, 89) for the tools (24).

18. The machine tool of claim 17, characterized in that the cover (87) is pivotable in the horizontal plane (X-Y) and has a locking opening (88) through which can be inserted a locking element (98, 99) associated with the tool (24), the locking element (98, 99) being adapted to be locked vertically with the cover (87) in a first pivot position, and to be released vertically in a second pivot position.

19. The machine tool of claim 18, characterized in that the cover (87) is adapted to be pivoted about an axis (91) being also the axis (91) of the chain joint (80).

20. The machine tool of one or more of claims 14 to 19, characterized in that the sheaths (95) have a second locking device for the tools (24).

21. The machine tool of claim 20, characterized in that the second locking device comprises a ball catch (100) engaging a standardized head (101) arranged on top of a taper (105) of a tool holder, and that the ball catch (100) is adapted to be actuated by means of a knob (99) being axially displaceable against the action of a spring (102).

22. The machine tool of claim 18 and 21, characterized in that the actuation knob (99) is arranged coaxially with the locking element of the first locking device (88, 89), the locking element being configured as a locking collar.

23. The machine tool of one or more of claims 13 to 21, characterized in that the chain (78) runs in the horizontal plane (X-Y), that the sleeves (85) are substantially cylindrical and are open (86) toward the bottom, and that the sheaths (95) are adapted to be inserted from below into the sleeves (85).

24. The machine tool of one or more of claims 1 to 22, characterized in that the tool magazine (26) is configured in an L-shape in a horizontal plane (X-Y), a first leg (29) of the L being arranged at a lateral side of the traveling column (20), and a second leg (28) of the L being arranged behind the traveling column (20).

25. The machine tool of claim 24, characterized in that the second leg (28) is longer than the first leg (29).

26. The machine tool of claim 24 or 25, characterized in that a first energy conductor chain (30) being flexible only in one plane, is guided from a first, stationary articulation point (31) in a horizontal plane (X-Y) to a second, displaceable articulation point (32) on the traveling column (20).

27. The machine tool of claim 26, characterized in that the first energy conductor chain (30) is arranged in a horizontal plane (X-Y) at the top end of the traveling column (20).

28. The machine tool of claim 26 or 27, characterized in that the first energy conductor chain (30) is so arranged in a loop (33) in the horizontal plane (X-Y), that the loop (33) is located outside a collision contour of the second leg (28) of the tool magazine (26) at any time.

29. The machine tool of one or more of claims 24 to 28, characterized in that a second energy conductor chain (35) is guided in a vertical plane (Y-Z) from a third articulation point (36) on the traveling column (20) to a fourth articulation point (37) on the spindle head (22).

30. The machine tool of claim 29, characterized in that the second energy conductor chain (35) is arranged on that side of the traveling column (20) facing away from the first leg (29) of the tool magazine (26).

31. The machine tool of claim 29 or 30, characterized in that the second energy conductor chain (35) is so arranged in a loop within the vertical plane (Y-Z), that the loop (35) hangs downwardly.

32. The machine tool of claim 31, characterized in that the third articulation point (36) lies below the second articulation point (32).

## Revendications

1. Machine-outil avec un changeur d'outil pour transférer des outils (24) entre une broche (23) d'axe vertical et une position de chargement/déchargement (77) d'un magasin d'outils (26), la position de chargement/déchargement (77) se trouvant, dans une vue de devant de la machine-outil (10), au-dessus de la broche (23) et en décalage latéral par rapport à cette dernière, et le changeur d'outil comprenant en outre deux bras changeurs (56, 66) qui, en exploitation symétrique, contribuent respectivement au transfert d'un premier outil (24) de la broche (23) à la position de chargement/déchargement (77) et d'un deuxième outil (24c) de la position de chargement/déchargement (77) à la broche (23), **caractérisée** en ce que les bras changeurs (56, 66) ne sont chacun rotatifs qu'autour d'un axe (58, 68), en ce que chacun des bras changeurs (56, 66) coopère avec une position de remise séparée (40, 41), les deux positions de remise (40, 41) se trouvant à des distances différentes de la position de chargement/déchargement (77), et en ce que le changeur d'outil comprend en outre un dispositif de transfert pour transférer les outils (24e) entre la position de chargement/déchargement (77) et une, au choix, des positions de remise (40, 41).

2. Machine-outil selon la revendication 1, **caractérisée** en ce que les positions de remise (40, 41) et la broche (23) sont disposées, dans un plan horizontal (X-Y), aux points anguleux d'un triangle isocèle (43, 44, 45) dont le sommet est formé par la broche (23).

3. Machine-outil selon la revendication 2, **caractérisée** en ce que l'angle au sommet (α) du triangle (43, 44, 45) est approximativement égal à 48°.

4. Machine-outil selon la revendication 2 ou 3, **caractérisée** en ce que des preneurs (61, 71) des bras changeurs (56, 66) sont, lors du changement d'outil, déplacés uniquement dans des plans verticaux contenant les côtés égaux (44, 45) du triangle (43, 44, 45).

5. Machine-outil selon la revendication 3 ou 4, **caractérisée** en ce que les axes de rotation (58, 68) des bras changeurs (56, 66) forment entre eux un angle d'environ 48°.

6. Machine-outil selon une ou plusieurs des revendications 1 à 5, **caractérisée** en ce que les bras changeurs (56, 66) sont entraînés au moyen de pignons (57, 67) qui engrènent avec des dentures mutuellement décalées (51, 52) d'une crémaillère (50), la crémaillère (50) pouvant être déplacée en direction verticale (Z) et les dentures (51, 52) étant disposées en décalage sur la périphérie de la crémaillère (50).

7. Machine-outil selon les revendications 3 et 6, **caractérisée** en ce que les dentures (51, 52) sont décalées d'environ 132°.

8. Machine-outil selon la revendication 6 ou 7, **caractérisée** en ce que la crémaillère (50) peut être déplacée au moyen d'une transmission sinusoïdale.

9. Machine-outil selon une ou plusieurs des revendications 1 à 8, **caractérisée** en ce que le dispositif de transfert comprend un preneur de transfert (112).

10. Machine-outil selon la revendication 9, **caractérisée** en ce que le preneur de transfert (112) peut être déplacé en direction verticale (116, 122) et en direction horizontale (115, 119).

11. Machine-outil selon la revendication 9 ou 10, **caractérisée** en ce que les outils (24e) sont maintenus dans des réceptacles tubulaires (95) pendant le transfert dans le dispositif de transfert.

12. Machine-outil selon les revendications 10 et 11, **caractérisée** en ce que le preneur de transfert (112) agit sur le réceptacle tubulaire (95).

13. Machine-outil selon une ou plusieurs des revendications 1 à 12, **caractérisée** en ce que le magasin d'outils (26) comprend une chaîne (78) guidée le long d'une voie sans fin (27), chaîne qui est pourvue de places de stockage (83) pour les outils (24) et qui déplace les outils (24), reçus dans les places de stockage (83), le long de la voie sans fin (27) de telle sorte qu'une place prédéterminée de stockage (83) peut être déplacée dans la position de chargement/déchargement (77) du magasin d'outils (26), les places de stockage (83) étant disposées dans le plan médian longitudinal (81) de la chaîne (78).

14. Machine-outil selon les revendications 12 et 13, **caractérisée** en ce que les outils (24) sont maintenus dans des réceptacles tubulaires séparés (95) dans la chaîne (78), en ce qu'ils sont déplacés avec leurs axes (82) dans le plan médian longitudinal (81) de la chaîne (78).

15. Machine-outil selon la revendication 13 ou 14, **caractérisée** en ce que la chaîne (78) comprend des maillons de chaîne (79) qui sont reliés les uns aux autres au moyen d'articulations de chaîne (80), les maillons de chaîne (79) présentant un manchon (85) pour recevoir les outils (24).

16. Machine-outil selon la revendication 15, **caractérisée** en ce que la chaîne (78) s'étend dans un plan horizontal (X-Y), et en ce que les manchons (85) sont essentiellement cylindriques et ouverts vers le bas (86).

17. Machine-outil selon la revendication 16, **caractérisée** en ce que les manchons (85) sont fermés sur leur côté supérieur au moyen d'un couvercle (87) qui est pourvu d'un premier dispositif de verrouillage (88, 89) pour les outils (24).

18. Machine-outil selon la revendication 17, **caractérisée** en ce que le couvercle (87) peut pivoter dans le plan horizontal (X-Y) et présente une ouverture de verrouillage (88) à travers laquelle peut être emboîté un élément de verrouillage (98, 99) associé à l'outil (24), élément qui est verrouillé en direction verticale (Z) dans une première position de pivotement du couvercle (87) et qui est libéré en direction verticale (Z) dans une deuxième position de pivotement.

19. Machine-outil selon la revendication 18, **caractérisée** en ce que le couvercle (87) peut pivoter autour d'un axe (91) qui est en même temps l'axe (91) de l'articulation de chaîne (80).

20. Machine-outil selon une ou plusieurs des revendications 14 à 19, **caractérisée** en ce que les réceptacles tubulaires (95) présentent un deuxième dispositif de verrouillage pour les outils (24).

21. Machine-outil selon la revendication 20, **caractérisée** en ce que le deuxième dispositif de verrouillage comprend un crantage à bille (100) qui agit sur une tête normalisée (101) au-dessus d'un cône (105) d'un porte-outil, et en ce que le crantage à bille (100) peut être actionné au moyen d'un bouton (99) pouvant être déplacé axialement à l'encontre d'une force élastique (102).

22. Machine-outil selon les revendications 18 et 21, **caractérisée** en ce que le bouton d'actionnement (99) est disposé coaxialement à l'élément de verrouillage, réalisé sous forme de collet de verrouillage (98) du premier dispositif de verrouillage (88, 89).

23. Machine-outil selon une ou plusieurs des revendications 13 à 21, **caractérisée** en ce que la chaîne (78) s'étend dans le plan horizontal (X-Y), en ce que les manchons (85) sont essentiellement cylindriques et ouverts vers le bas (86), et en ce que les réceptacles tubulaires (95) peuvent être emboîtés par le bas dans les manchons (85).

24. Machine-outil selon une ou plusieurs des revendications 1 à 22, **caractérisée** en ce que le magasin d'outils (26) est configuré en forme de L dans un plan horizontal (X-Y), une première branche (29) du L étant disposée sur le côté de la colonne mobile (20) et une deuxième branche (28) du L étant disposée derrière la colonne mobile (20).

25. Machine-outil selon la revendication 24, **caractérisée** en ce que la deuxième branche (28) est plus longue que la première branche (29).

26. Machine-outil selon la revendication 24 ou 25, caractérisée en ce qu'une première chaîne d'alimentation en énergie (30), flexible seulement dans un plan, s'étend dans un plan horizontal (X-Y) depuis un premier point d'articulation (31), spatialement fixe, jusqu'à un deuxième point d'articulation mobile (32) sur la colonne mobile (20).

27. Machine-outil selon la revendication 26, **caractérisée** en ce que la première chaîne d'alimentation en énergie (30) est disposée dans un plan horizontal (X-Y) à l'extrémité supérieure de la colonne mobile (20).

28. Machine-outil selon la revendication 26 ou 27, **caractérisée** en ce que la première chaîne d'alimentation en énergie (30) est disposée en une boucle (33) dans le plan horizontal (X-Y) de telle sorte que la boucle (33) se trouve toujours en dehors d'un contour perturbateur de la deuxième branche (28) du magasin d'outils (26).

29. Machine-outil selon une ou plusieurs des revendications 24 à 28, **caractérisée** en ce qu'une deuxième chaîne d'alimentation en énergie (35) s'étend, dans un plan vertical (Y-Z), depuis un troisième point d'articulation (36) sur la colonne mobile (20) jusqu'à un quatrième point d'articulation (37) sur la poupée (22).

30. Machine-outil selon la revendication 29, **caractérisée** en ce que la deuxième chaîne d'alimentation en énergie (35) est disposée sur le côté (34) de la colonne mobile (20) qui est opposé à la première branche (29) du magasin d'outils (26).

31. Machine-outil selon la revendication 29 ou 30, **caractérisée** en ce que la deuxième chaîne d'alimentation en énergie (35) est disposée en une boucle (35) dans le plan vertical (Y-Z) de telle sorte que la boucle (35) pend vers le bas.

32. Machine-outil selon la revendication 31, **caractérisée** en ce que le troisième point d'articulation (36) se trouve en dessous du deuxième point d'articulation (32).
